# EUROPEAN PATENT APPLICATION

(11) **EP 4 458 882 A1**
(43) Date of publication of application: **06.11.2024**
(21) Application number: 22915498.4
(22) Date of filing: 27.10.2022
(51) Int. Cl.: C08G 69/26, D01F 6/60, D01F 6/80

(54) **POLYAMIDE-BASED POLYMER**

(30) Priority: 29.12.2021 JP 2021215456
(71) Applicant: Japan Advanced Institute of Science and Technology, Nomi-shi Ishikawa 923-1292 (JP)
(72) Inventor: KANEKO Tatsuo, Nomi-shi, Ishikawa 923-1292 (JP); TAMIYA Munehiro, Nomi-shi, Ishikawa 923-1292 (JP); SINGH Maninder, Nomi-shi, Ishikawa 923-1292 (JP)
(74) Representative: Schön, Christoph
(86) International application number: PCT/JP2022/040104
(87) International publication number: WO 2023/127264

(57) **Abstract**

This polyamide-based polymer of a dicarboxylic acid monomer, a diamine compound and a dicarboxylic acid compound is characterized in that: itaconic acid is used as the dicarboxylic acid monomer; a diamine compound represented by the formula (I): H₂N-R¹-NH₂ (in the formula, R¹ denotes an alkylene group having 4-12 carbon atoms) is used as the diamine compound; and a dicarboxylic acid compound represented by the formula (II): HOOC-R²-COOH (in the formula, R² denotes an alkylene group having 8-24 carbon atoms) is used as the dicarboxylic acid compound.

## Description

### TECHNICAL FIELD

The present invention relates to a polyamide-based polymer. More specifically, the present invention relates to a polyamide-based polymer which is expected to be used in place of conventional nylon (product name).

### BACKGROUND ART

A polyamide represented by nylon (product name, hereinafter referred to the same) has been widely used in not only fibers but also automobiles parts around an engine, such as an intake manifold, since the polyamide is excellent in properties such as heat resistance and oil resistance.

In recent years, as a polyamide having a high glass transition temperature and properties as an engineering plastic, there has been proposed a polyamide made by carrying out a reaction of itaconic acid with an aliphatic dialkylene diamine having 2 to 6 methylene groups or an aromatic diamine such as diamino diphenyl ether or xylylenediamine, and carrying out dehydration condensation of the resulting product (see, for example, paragraph [0016] and working examples of Patent Literature 1). The polyamide however has drawbacks such that the polyamide is poor in extensibility and hydrophilicity.

Conventionally, nylon having high mechanical strength such as tensile strength has been used in fishing gears such as a fishing net and a fishing line. However, nowadays, marine pollution caused by plastic garbage has become an international issue because the plastic garbage such as nylon has poor degradability in nature, and floats in the ocean without being broken down. As a result, it has become a problem that fish ingest the plastic garbage, and seabirds get nylon fishing lines entangled in their wings and legs.

Accordingly, development of a resin material, which is comprehensively excellent in heat resistance, stretchability, moldability, tensile strength, hydrophilicity, and disintegrability and degradability in water, and which can be substituted for nylon, has been urgently desired.

### PRIOR ART LITERATURES

### PATENT LITERATURES

Patent Literature 1: Japanese Patent No. 5777134

### SUMMARY OF THE INVENTION

### PROBLEMS TO BE SOLVED BY THE INVENTION

The present invention has been made in view of the above-mentioned prior art. An object of the present invention is to provide a polyamide-based polymer, in which itaconic acid available as a bio-based monomer is used as a raw material of the polyamide-based polymer, which is comprehensively excellent in heat resistance, stretchability, moldability, tensile strength, hydrophilicity, and disintegrability and degradability in water, and which can be substituted for nylon, and a method for producing the same; a polyamide-based fiber including the polyamide-based polymer; and a molding material including the polyamide-based polymer.

### MEANS FOR SOLVING THE PROBLEMS

The present invention relates to:
(1) a polyamide-based polymer made of a dicarboxylic acid monomer, a diamine compound and a dicarboxylic acid compound, wherein itaconic acid is used as the dicarboxylic acid monomer; a diamine compound represented by the formula (I):

   H₂N-R¹-NH₂ (I)

   wherein R¹ is an alkylene group having 4 to 12 carbon atoms,
   is used as the diamine compound; and a dicarboxylic acid compound represented by the formula (II):

      HOOC-R²-COOH (II)

      wherein R² is an alkylene group having 8 to 24 carbon atoms,
      is used as the dicarboxylic acid compound;
(2) a polyamide-based fiber including the polyamide-based polymer described in the above item (1);
(3) a molding material including the polyamide-based polymer described in the above item (1); and
(4) a method for producing the polyamide-based polymer made of a dicarboxylic acid monomer, a diamine compound and a dicarboxylic acid compound, which includes using itaconic acid as the dicarboxylic acid monomer, a diamine compound represented by the formula (I):

   H₂N-R¹-NH₂ (I)

   wherein R¹ is an alkylene group having 4 to 12 carbon atoms,
   as the diamine compound, and a dicarboxylic acid compound represented by the formula (II):

      HOOC-R²-COOH (II)

      wherein R² is an alkylene group having 8 to 24 carbon atoms,
      as the dicarboxylic acid compound;
      carrying out a reaction of itaconic acid with the diamine compound represented by the formula (I) and the dicarboxylic acid compound represented by the formula (II); and carrying out a polymerization of the resulting reaction product.

### EFFECT OF THE INVENTION

According to the present invention, there are provided a polyamide-based polymer, in which itaconic acid available as a bio-based monomer is used as a raw material of the polyamide-based polymer, which is comprehensively excellent in heat resistance, stretchability, moldability, tensile strength, hydrophilicity, and disintegrability and degradability in water, and which can be substituted for nylon, and a method for producing the same; a polyamide-based fiber including the polyamide-based polymer; and a molding material including the polyamide-based polymer.

### BRIEF DESCRIPTION OF THE DRAWINGS

Fig. 1 is a graph showing a nuclear magnetic resonance (¹H-NMR) spectrum of a polyamide-based polymer obtained in Example 1.
Fig. 2 is a graph showing an infrared absorption spectrum of the polyamide-based polymer obtained in Example 1.
Fig. 3 is a graph showing a nuclear magnetic resonance (¹H-NMR) spectrum of a polyamide-based polymer obtained in Example 2.
Fig. 4 is a graph showing an infrared absorption spectrum of the polyamide-based polymer obtained in Example 2.
Fig. 5 is a graph showing a nuclear magnetic resonance (¹H-NMR) spectrum of a polyamide-based polymer obtained in Example 3.
Fig. 6 is a graph showing an infrared absorption spectrum of the polyamide-based polymer obtained in Example 3.
Fig. 7 is a graph showing a nuclear magnetic resonance (¹H-NMR) spectrum of a polyamide-based polymer obtained in Example 4.
Fig. 8 is a graph showing an infrared absorption spectrum of the polyamide-based polymer obtained in Example 4.
Fig. 9 is a graph showing a result of thermogravimetric analysis when the reaction product obtained in Example 5 is heated.
Fig. 10 is a graph showing a nuclear magnetic resonance (¹H-NMR) spectrum of a polyamide-based polymer obtained in Example 5.
Fig. 11 is a graph showing an infrared absorption spectrum of the polyamide-based polymer obtained in Example 5.
Fig. 12 is a graph showing a nuclear magnetic resonance (¹H-NMR) spectrum of a polyamide-based polymer obtained in Example 6.
Fig. 13 is a graph showing an infrared absorption spectrum of the polyamide-based polymer obtained in Example 6.
Fig. 14 is a graph showing a nuclear magnetic resonance (¹H-NMR) spectrum of a polyamide-based polymer obtained in Example 7.
Fig. 15 is a graph showing an infrared absorption spectrum of the polyamide-based polymer obtained in Example 7.
Fig. 16 is a graph showing a nuclear magnetic resonance (¹H-NMR) spectrum of a polyamide-based polymer obtained in Example 8.
Fig. 17 is a graph showing an infrared absorption spectrum of the polyamide-based polymer obtained in Example 8.
Fig. 18 is a graph showing a nuclear magnetic resonance (¹H-NMR) spectrum of a polyamide-based polymer obtained in Example 9.
Fig. 19 is a graph showing an infrared absorption spectrum of the polyamide-based polymer obtained in Example 9.
Fig. 20 is a graph showing a nuclear magnetic resonance (¹H-NMR) spectrum of a polyamide-based polymer obtained in Example 10.
Fig. 21 is a graph showing an infrared absorption spectrum of the polyamide-based polymer obtained in Example 10.
Fig. 22 is a graph showing a nuclear magnetic resonance (¹H-NMR) spectrum of a polyamide-based polymer obtained in Example 11.
Fig. 23 is a graph showing an infrared absorption spectrum of the polyamide-based polymer obtained in Example 11.
Fig. 24 is a graph showing a nuclear magnetic resonance (¹H-NMR) spectrum of a polyamide-based polymer obtained in Example 12.
Fig. 25 is a graph showing an infrared absorption spectrum of the polyamide-based polymer obtained in Example 12.
Fig. 26 is a graph showing a nuclear magnetic resonance (¹H-NMR) spectrum of a polyamide-based polymer obtained in Example 13.
Fig. 27 is a graph showing an infrared absorption spectrum of the polyamide-based polymer obtained in Example 13.
Fig. 28 is a graph showing a nuclear magnetic resonance (¹H-NMR) spectrum of a polyamide-based polymer obtained in Example 14.
Fig. 29 is a graph showing an infrared absorption spectrum of the polyamide-based polymer obtained in Example 14.
Fig. 30 is a graph showing a nuclear magnetic resonance (¹H-NMR) spectrum of a polyamide-based polymer obtained in Example 15.
Fig. 31 is a graph showing an infrared absorption spectrum of the polyamide-based polymer obtained in Example 15.
Fig. 32 is a graph showing a nuclear magnetic resonance (¹H-NMR) spectrum of a polymer obtained in Comparative Example 1.
Fig. 33 is a graph showing an infrared absorption spectrum of the polymer obtained in Comparative Example 1.
Fig. 34 is a graph showing a nuclear magnetic resonance (¹H-NMR) spectrum of a polyamide-based polymer obtained in Comparative Example 2.
Fig. 35 is a graph showing an infrared absorption spectrum of the polyamide-based polymer obtained in Comparative Example 2.
Fig. 36 is a graph showing a nuclear magnetic resonance (¹H-NMR) spectrum of a polyamide-based polymer obtained in Comparative Example 3.
Fig. 37 is a graph showing an infrared absorption spectrum of the polyamide-based polymer obtained in Comparative Example 3.
Fig. 38 is a graph showing a nuclear magnetic resonance (¹H-NMR) spectrum of a polyamide-based polymer obtained in Comparative Example 4.
Fig. 39 is a graph showing an infrared absorption spectrum of the polyamide-based polymer obtained in Comparative Example 4.
Fig. 40 is a graph showing a nuclear magnetic resonance (¹H-NMR) spectrum of a polyamide-based polymer obtained in Comparative Example 5.
Fig. 41 is a graph showing an infrared absorption spectrum of the polyamide-based polymer obtained in Comparative Example 5.
Fig. 42 is a photograph substituted for a drawing, showing a filament produced by using the polymer obtained in Example 2.
Fig. 43 is a photograph substituted for a drawing, showing a filament produced by using the polymer obtained in Example 6.

### MODE FOR CARRYING OUT THE INVENTION

As described above, the polyamide-based polymer according to the present invention is a polyamide-based polymer made of a dicarboxylic acid monomer, a diamine compound and a dicarboxylic acid compound, wherein itaconic acid is used as the dicarboxylic acid monomer; a diamine compound represented by the formula (I):

H₂N-R¹-NH₂ (I)

wherein R¹ is an alkylene group having 4 to 12 carbon atoms,
is used as the diamine compound; and a dicarboxylic acid compound represented by the formula (II):

   HOOC-R²-COOH (II)

   wherein R² is an alkylene group having 8 to 24 carbon atoms,
   is used as the dicarboxylic acid compound.

In the polyamide-based polymer according to the present invention, since itaconic acid is used as the dicarboxylic acid monomer, the diamine compound represented by the formula (I) is used as the diamine compound, and the dicarboxylic acid compound represented by the formula (II) is used as the dicarboxylic acid compound, the polyamide-based polymer according to the present invention is comprehensively excellent in heat resistance, stretchability, moldability, tensile strength, hydrophilicity, and disintegrability and degradability in water.

The polyamide-based polymer according to the present invention can be prepared by using itaconic acid as the dicarboxylic acid monomer, the diamine compound represented by the formula (I) as the diamine compound, and the dicarboxylic acid compound represented by the formula (II) as the dicarboxylic acid compound, reacting itaconic acid with the diamine compound represented by the formula (I) and the dicarboxylic acid compound represented by the formula (II), and carrying out the polymerization of the resulting reaction product.

The itaconic acid is easily commercially available from, for example, FUSO CHEMICAL CO., LTD., IWATA CHEMICAL CO., LTD., Cargill, Incorporated, and the like. The itaconic acid can be prepared with fungus such as Aspergillus terreus. Alternatively, the itaconic acid can be synthesized by using petroleum as a raw material. Among these itaconic acids, the itaconic acid prepared with fungus such as Aspergillus terreus has advantageous merits of being more environmentally friendly in the earth than the itaconic acid synthesized by using petroleum as a raw material.

In the diamine compound represented by the formula (I), R¹ is an alkylene group having 4 to 12 carbon atoms. R¹ is an alkylene group having 6 to 12 carbon atoms, and preferably an alkylene group having 6 to 8 carbon atoms, from the viewpoint of preparation of a polyamide-based polymer comprehensively excellent in heat resistance, stretchability, moldability, tensile strength, hydrophilicity, and disintegrability and degradability in water.

The diamine compound represented by the formula (I) includes 1,6-hexanediamine, 1,7-heptanediamine, 1,8-octanediamine, 1,10-decanediamine, 1,12-dodecanediamine and the like, and these diamine compounds can be used alone respectively, or two or more kinds thereof can be used in combination.

In the dicarboxylic acid compound represented by the formula (II), R² is an alkylene group having 8 to 24 carbon atoms. R² is an alkylene group having 8 to 24 carbon atoms, preferably an alkylene group having 10 to 20 carbon atoms, and more preferably an alkylene group having 10 to 18 carbon atoms, from the viewpoint of preparation of a polyamide-based polymer comprehensively excellent in heat resistance, stretchability, moldability, tensile strength, hydrophilicity, and disintegrability and degradability in water.

The dicarboxylic acid compound represented by the formula (II) includes, for example, 1,10-decanedicarboxylic acid, 1,11-undecanedicarboxylic acid, 1,12-dodecanedicarboxylic acid, 1,14-tetradecanedicarboxylic acid, 1,16-hexadecanedicarboxylic acid, 1,18-octadecanedicarboxylic acid, 1,20-eicosanedicarboxylic acid and the like, and these dicarboxylic acid compounds can be used alone respectively, or two or more kinds thereof can be used in combination.

Each of itaconic acid and the dicarboxylic acid compound represented by the formula (II) is a compound having two carboxyl groups in its molecule, and the diamine compound represented by the formula (I) is a compound having two amino groups. Therefore, the diamine compound represented by the formula (I) reacts with itaconic acid and the dicarboxylic acid compound represented by the formula (II) in a stoichiometric amount. Accordingly, the total amount of itaconic acid and the dicarboxylic acid compound represented by the formula (II) per one mole of the diamine compound represented by the formula (I) is theoretically one mole. A molar ratio of the diamine compound represented by the formula (I) to itaconic acid and the dicarboxylic acid compound represented by the formula (II) [diamine compound represented by the formula (I)/(itaconic acid and dicarboxylic acid compound represented by the formula (II)) ] is preferably 40/60 to 60/40, and more preferably 45/55 to 55/45, from the viewpoint of preparation of a polyamide-based polymer comprehensively excellent in heat resistance, extensibility, moldability, tensile strength, hydrophilicity, and disintegrability and degradability in water.

Incidentally, a diamine compound other than the diamine compound represented by the formula (I) (hereinafter referred to as other diamine compound) can be used together with the diamine compound represented by the formula (I) within a scope which would not hinder an object of the present invention. The other diamine compound includes, for example, aromatic diamine compounds such as phenylenediamine and xylylenediamine, and the like. The present invention is not limited only to those exemplified ones.

A molar ratio of itaconic acid to the dicarboxylic acid compound represented by the formula (II) [itaconic acid/dicarboxylic acid compound represented by the formula (II)] is preferably 5/95 to 90/10, more preferably 15/85 to 90/10, and furthermore preferably 35/65 to 90/10, from the viewpoint of preparation of a polyamide-based polymer comprehensively excellent in heat resistance, stretchability, moldability, tensile strength, hydrophilicity, and disintegrability and degradability in water.

A reaction of itaconic acid, the diamine compound represented by the formula (I) and the dicarboxylic acid compound represented by the formula (II) can be carried out in an organic solvent. It is preferred that the organic solvent can dissolve itaconic acid, the diamine represented by the formula (I) and the dicarboxylic acid represented by the formula (II) within a temperature range of 20 to 90°C, and that the organic solvent has poor solubility or insolubility to a reaction product of itaconic acid, the diamine represented by the formula (I) and the dicarboxylic acid represented by the formula (II).

The organic solvent includes, for example, aliphatic alcohols having 1 to 3 carbon atoms, such as methanol, ethanol and propanol; ketone compounds such as acetone and methyl ethyl ketone; ethyl acetate, tetrahydrofuran, dioxane, chloroform, dichloromethane, chlorobenzene, phenol, cresol, and the like. The present invention is not limited only to those exemplified ones. These organic solvents can be used alone respectively, or two or more kinds thereof can be used in combination.

The amount of the organic solvent is not particularly limited so long as a reaction of itaconic acid, the diamine represented by the formula (I) and the dicarboxylic acid represented by the formula (II) can be efficiently carried out. The amount of the organic solvent is usually preferably an amount 3 to 20 times or so of the total amount (mass) of itaconic acid, the diamine represented by the formula (I) and the dicarboxylic acid represented by the formula (II), and more preferably an amount 5 to 15 times or so of the total amount (mass) of itaconic acid, the diamine represented by the formula (I) and the dicarboxylic acid represented by the formula (II).

When a reaction of itaconic acid, the diamine compound represented by the formula (I) and the dicarboxylic acid compound represented by the formula (II) is carried out, a reaction temperature is not particularly limited. The reaction temperature is preferably 20 to 90°C or so from the viewpoint of increase in reaction efficiency. In addition, when the reaction of itaconic acid, the diamine compound represented by the formula (I) and the dicarboxylic acid compound represented by the formula (II) is carried out, a reaction time cannot be absolutely determined because the reaction time differs depending on an amount of the organic solvent used, the reaction temperature and the like. The reaction time is usually 4 to 12 hours or so. When the reaction of itaconic acid, the diamine compound represented by the formula (I) and the dicarboxylic acid compound represented by the formula (II) is carried out, a reaction atmosphere is not particularly limited, and can be the atmosphere or an inert gas such as nitrogen gas or argon gas.

A reaction mixture can be obtained by carrying out a reaction of itaconic acid, the diamine compound represented by the formula (I) and the dicarboxylic acid compound represented by the formula (II) as mentioned above. It is considered that the reaction mixture includes a salt of itaconic acid and the diamine compound represented by the formula (I), and a salt of the dicarboxylic acid compound represented by the formula (II) and the diamine compound represented by the formula (I) as by-products.

After the reaction, a reaction product can be collected from the reaction mixture by crystallization. A method for crystallizing the reaction product from the reaction mixture includes, for example, a method of cooling the reaction mixture to a temperature of 0 to 25°C or so, a method of adding dropwise a poor solvent such as hexane, toluene or xylene to the reaction mixture, a method of evaporating a solvent included in the reaction mixture, and the like. The present invention is not limited only to those methods.

The crystallized reaction product can be collected from the reaction mixture by a method such as filtration. The collected reaction product can be washed with the above-mentioned organic solvent having a temperature of 0 to 25°C or so as occasion demands. In addition, the reaction product obtained in the above can be dried, for example, by vacuum drying or the like.

Next, a polymerization of the reaction product obtained in the above is carried out to give the polyamide-based polymer according to the present invention.

A method for carrying out a polymerization of the reaction product includes, for example, a bulk polymerization method, a solution polymerization method, a suspension polymerization method, an emulsion polymerization method and the like, and the present invention is not limited only to those exemplified ones. Among these polymerization methods, the bulk polymerization method is preferred from the viewpoint of efficient preparation of a polyamide-based polymer including impurities in a small amount. When the polyamide-based polymer is prepared by the bulk polymerization method, the polyamide-based polymer can be prepared by heating the reaction product obtained in the above to a polymerization temperature of 150 to 250°C or so to polymerize the reaction product.

When the polymerization of the reaction product is carried out, an atmosphere is not particularly limited, and can be the atmosphere or an inert gas such as nitrogen gas or argon gas. The atmosphere is preferably a gas including oxygen in a low content, and more preferably an inert gas, from the viewpoint of avoidance of influence due to oxygen included in the atmosphere. The polymerization time of the reaction product is not particularly limited, and is usually 2 to 24 hours or so.

Incidentally, when the polymerization of the reaction product is carried out, it is preferred to use a catalyst in an appropriate amount from the viewpoint of efficient preparation of the polyamide-based polymer. The catalyst includes, for example, lithium dihydrogen phosphate, dilithium hydrogen phosphate, trilithium phosphate, sodium dihydrogen phosphate, disodium hydrogen phosphate, trisodium phosphate, potassium dihydrogen phosphate, dipotassium hydrogen phosphate, tripotassium phosphate and the like, and the present invention is not limited only to those exemplified ones. Among the catalysts, sodium dihydrogen phosphate, disodium hydrogen phosphate and trisodium phosphate are preferred, and sodium dihydrogen phosphate is more preferred.

As described above, the polyamide-based polymer can be obtained by carrying out a polymerization of the reaction product. Whether or not the polyamide polymer is produced can be confirmed, for example, by nuclear magnetic resonance spectroscopy, infrared absorption spectroscopy and the like.

The polyamide-based polymer obtained in the above can be purified, for example, by dissolving the polyamide-based polymer in a solvent such as N,N-dimethylformamide, and thereafter precipitating the polyamide-based polymer with a ketone compound such as acetone as occasion demands. In addition, the polyamide-based polymer obtained in the above can be dried, for example, by vacuum drying and the like.

The polyamide-based polymer obtained in the above is a copolymer of itaconic acid, the diamine represented by the formula (I) and the dicarboxylic acid represented by the formula (II). The polyamide-based polymer usually has the recurring unit represented by the formula (IIIa): 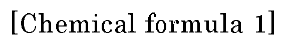 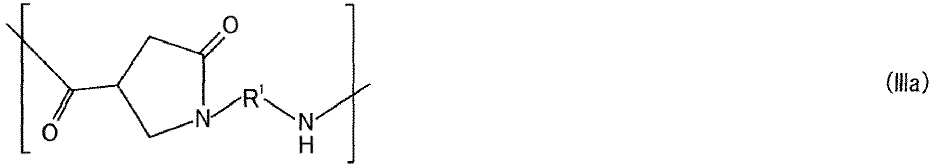
wherein R¹ is the same as mentioned above,
and a recurring unit represented by the formula (IIIb): 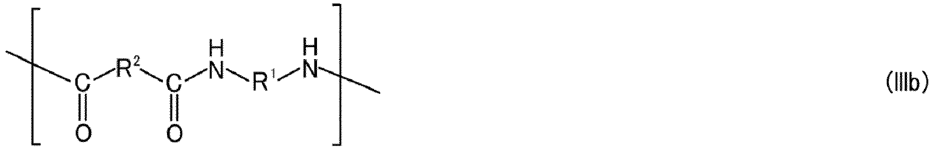 wherein R² is the same as mentioned above. Since the polyamide-based polymer has the recurring unit represented by the formula (IIIa) and the recurring unit represented by the formula (IIIb), the polyamide-based polymer is comprehensively excellent in heat resistance, stretchability, moldability, tensile strength, hydrophilicity, and disintegrability and degradability in water.

The polyamide-based polymer is typically a random copolymer of the recurring unit represented by the formula (IIIa) and the recurring unit represented by the formula (IIIb). However, the recurring unit represented by the formula (IIIa) and the recurring unit represented by the formula (IIIb) can exist alternately or in blocks.

Incidentally, the polyamide-based polymer according to the present invention may include a recurring unit other than the recurring unit represented by the formula (IIIa) and the recurring unit represented by the formula (IIIb) within a scope which would not hinder an object of the present invention. The above-mentioned other recurring unit may include not only a recurring unit which unavoidably generates as a byproduct when the polymerization of itaconic acid, the diamine represented by the formula (I) and the dicarboxylic acid represented by the formula (II) is carried out, but also a recurring unit based on a third monomer which is used as another monomer other than itaconic acid, the diamine represented by the formula (I) and the dicarboxylic acid represented by the formula (II). The third monomer can be used within a scope which would not hinder an object of the present invention.

The molar ratio of the recurring unit represented by the formula (Ia) to the recurring unit represented by the formula (IIIb) [recurring unit represented by the formula (Ia)/recurring unit represented by the formula (IIIb)] is preferably 5/95 to 90/10, more preferably 15/85 to 90/10, and furthermore preferably 35/65 to 90/10, from the viewpoint of preparation of a polyamide-based polymer comprehensively excellent in heat resistance, stretchability, moldability, tensile strength, hydrophilicity, and disintegrability and degradability in water.

The content of the recurring unit represented by the formula (Ia) in the polyamide-based polymer is preferably 5 to 90 % by mole, more preferably 15 to 90 % by mole, and furthermore preferably 35 to 90 % by mole, from the viewpoint of preparation of a polyamide-based polymer comprehensively excellent in heat resistance, extensibility, moldability, tensile strength, hydrophilicity, and disintegrability and degradability in water. In addition, the content of the recurring unit represented by the formula (IIIb) in the polyamide-based polymer is preferably 10 to 95 % by mole, more preferably 10 to 85 % by mole, and furthermore preferably 10 to 65 % by mole, from the viewpoint of preparation of a polyamide-based polymer comprehensively excellent in heat resistance, extensibility, moldability, tensile strength, hydrophilicity, and disintegrability and degradability in water.

The number-average molecular weight of the polyamide-based polymer according to the present invention is not particularly limited, and is preferably 15000 to 800000, and more preferably 20000 to 500000, from the viewpoint of preparation of a polyamide-based polymer comprehensively excellent in heat resistance, extensibility, moldability, tensile strength, hydrophilicity, and disintegrability and degradability in water.
Incidentally, the number-average molecular weight of the polyamide-based polymer is a value as determined in accordance with a method described in the following working examples.

The polyamide-based polymer according to the present invention is melted by heating. Therefore, the molten polyamide-based polymer liquid can be used as a spinning dope. A solution of the polyamide-based polymer according to the present invention, which is prepared by dissolving the polyamide-based polymer in an organic solvent, can also be used as a spinning dope.

After the spinning dope is extruded from a pore of a spinneret of a spinning apparatus, a polyamide-based fiber can be produced by cooling the molten polyamide-based polymer when the molten polyamide-based polymer is used as the spinning dope, or by removing the organic solvent from the solution of the polyamide-based polymer by volatilization when the solution of the polyamide-based polymer is used as the spinning dope.

The spinneret is generally made of an alloy of gold and platinum, an alloy of platinum and iridium, an alloy of platinum and palladium, or the like. The pore diameter of the spinneret is appropriately determined in accordance with the fineness of a target polyamide-based fiber. The pore diameter of the spinneret is usually 0.05 to 0.1 mm or so. The number of the pore provided in the spinneret is not particularly limited. The number of the pore is usually 1 to 20000 or so.

The polyamide-based fiber can be a single fiber (a filament). Alternatively, the polyamide-based fiber can be a bundle of fibers (a strand) produced by converging plural single fibers made by extruding the spinning dope from plural pores of the spinneret.

The polyamide-based fiber obtained in the above can be subjected to a treatment such as washing with water, drying or crimping as occasion demands.

The fineness of the polyamide-based fiber obtained in the above cannot be absolutely determined, because the fineness differs depending on uses of the polyamide-based fiber. Therefore, it is preferred to determine the fineness of the polyamide-based fiber in accordance with the uses and the like of the polyamide-based fiber. One example of the fineness of the polyamide-based fiber includes, for example, 1 to 30 dtex. However, the present invention is not limited by the fineness. The fineness of the polyamide-based fiber can be easily controlled by adjusting the pore diameter of the spinneret or adjusting a stretching ratio of the polyamide-based fiber in stretching.

The polyamide-based fiber obtained in the above can be stretched in order to improve mechanical strength of the polyamide-based fiber as occasion demands. The stretching of the polyamide-based fiber is usually one-step stretching. However, the stretching of the polyamide-based fiber can be a multi-stage stretching for additionally stretching the polyamide-based fiber under different conditions such as different temperatures.

The polyamide-based fiber can be used as a long fiber. Alternatively, the polyamide-based fiber can be used as a staple fiber by cutting the polyamide-based fiber to a desired fiber length. The fiber length of the polyamide-based fiber differs depending on uses of the polyamide-based fiber. Accordingly, it is preferred that the fiber length of the polyamide-based fiber is appropriately determined in accordance with the uses and the like of the polyamide-based fiber. The polyamide-based fiber can be used, for example, for a woven fabric, a nonwoven fabric, a knitting and the like.

The knitting can be produced by knitting the polyamide-based fiber with a stockinette knitting machine, and the like. When knitting is produced, the polyamide-based fiber can be used as it is, or a blended yarn of the polyamide-based fiber and a fiber such as a synthetic fiber such as a polyester fiber or an acrylic fiber, a cotton thread, knitting wool, or a raw silk thread can be used. The knitting includes, for example, flat knitting, rubber knitting, pearl knitting and the like, and the present invention is not limited only to those exemplified ones.

The woven fabric can be produced by using the polyamide-based fiber as a warp, a weft or both of a warp and a weft, and weaving the warp and the weft with a loom, and the like. The woven fabric can be a blended woven fabric in which a blended yarn containing the polyamide-based fiber is used in a part or both of a warp and a weft. The woven fabric can be a mixed woven fabric in which a component of the warp is different from that of the weft, and the polyamide-based fiber is used in the warp and/or the weft. Alternatively, the woven fabric can be a high distribution fabric containing the polyamide-based fiber according to the present invention, in which a warp and a weft each having a different fiber diameter from each other are used. The texture of the woven fabric includes, for example, a plain weave texture, an oblique weave texture, a twill weave texture, a satin weave texture, a change organization texture and the like, and the present invention is not limited only to those exemplified ones.

The nonwoven fabric can be manufactured by a dry method or a wet method using fibers including the polyamide-based fiber. The fiber used in the nonwoven fabric can be composed only of the polyamide-based fiber, or can be a blended yarn of the polyamide-based fiber and a fiber such as a synthetic fiber such as a polyester fiber or an acrylic fiber, a cotton thread, knitting wool, or a raw silk thread. The dry method includes, for example, a chemically bonding method, a thermally bonding method, a mechanically bonding method such as a needle punching method or an air-laid method, and the like. The present invention is not limited only to those exemplified ones. The wet method includes, for example, a water-jet interlacing method and the like, and the present invention is not limited only to the exemplified ones.

Since the polyamide-based polymer according to the present invention is used in the polyamide-based fiber, the polyamide-based fiber is excellent in disintegration property and degradability in water, stretchability, and toughness. Accordingly, the polyamide-based fiber can be suitably used for fishing gears such as a fishing net and a fishing line, agricultural implements, and the like. The polyamide-based fiber also can be suitably used for various uses such as clothing such as gloves, underwear, socks, shirts and clothes, a face mask, a paper diaper material, a lotion sheet for wiping, and the like.

In addition, since the polyamide-based polymer according to the present invention is dissolved in an organic solvent, the polyamide-based polymer can be used as a solution of an organic solvent. The organic solvent includes, for example, aliphatic alcohols having 1 to 4 carbon atoms, such as methanol, ethanol, propanol and butanol; ketone compounds such as acetone and methyl ethyl ketone; ethyl acetate, tetrahydrofuran, dioxane, chloroform, dichloromethane, chlorobenzene, phenol, cresol, and the like. The present invention is not limited only to those exemplified ones. These organic solvents can be used alone respectively, or two or more kinds thereof can be used in combination.

The amount of the organic solvent to the polyamide-based polymer according to the present invention cannot be absolutely determined because the amount of the organic solvent differs depending on the kind of the organic solvent and the like. It is preferred that the polyamide-based polymer is mixed with the organic solvent so that a spinning dope has a desired viscosity at a predetermined temperature.

A polyamide fiber can be produced by extruding the spinning dope obtained in the above from a pore of the spinneret, and volatilizing and removing the organic solvent from the spinning dope.

Incidentally, an additive can be included in the polyamide-based polymer according to the present invention in an appropriate amount as occasion demands in accordance with its uses. The additive includes, for example, a colorant such as a pigment or a dye, an ultraviolet absorbing agent, an ultraviolet stabilizer, an antioxidant, an anti-rust agent, an antibacterial agent, a plasticizer, an alga-proofing agent, an antifungal agent, a flame retardant, a foaming agent and the like, and the present invention is not limited only to those exemplified ones. These additives can be used alone respectively, or two or more kinds thereof can be used in combination. The amount of the additive cannot be absolutely determined because the amount of the additive differs depending on the kind of the additive. Therefore, it is preferred that the amount of the additive is appropriately determined in accordance with the kind of the additive.

Since the polyamide-based polymer has thermoplasticity, the polyamide-based polymer can be used as a molten polymer by heating and melting the polyamide-based polymer. Since the polyamide-based polymer according to the present invention is dissolved in an organic solvent, the polyamide-based polymer can be used as a solution of an organic solvent.

Therefore, the polyamide-based polymer according to the present invention can be suitably used for a molding material such as an injection molding material for a molded body such as a film or a plate. In addition, a molded body can be produced from a molding material made by mixing the polyamide-based polymer according to the present invention with a fiber with a three-dimensional (3D) printer. Furthermore, since the polyamide-based polymer according to the present invention is comprehensively excellent in heat resistance, stretchability, moldability, tensile strength, hydrophilicity, and disintegrability and degradability in water, the polyamide-based fiber can be suitably used for fishing gears such as a fishing net and a fishing line, and agricultural implements. The polyamide-based fiber also can be suitably used for various uses such as clothing such as gloves, underwear, socks, shirts and clothes, a face mask, a paper diaper material, a lotion sheet for wiping, and the like.

### EXAMPLES

Next, the present invention is more specifically described based on working examples. However, the present invention is not limited only to the working examples.

Incidentally, the structure and molecular weight of a polymer obtained in each working example and each comparative example described below were determined by the following methods.

### [Structure of a polymer]

### (1) Nuclear magnetic resonance (¹H-NMR) spectrum

A nuclear magnetic resonance (¹H-NMR) spectrum of a polymer was determined by using a nuclear magnetic resonance device [manufactured by Bruker Corporation, trade name: AVANCE III 400, 400MHz] and a sample tube made of glass, which was charged with a solution prepared by dissolving 5 mg of a sample (polymer) in 0.5 mL of dimethyl sulfoxide-d₆ at a temperature of 25°C for accumulation count of 16 times.

### (2) Infrared absorption spectrum

An infrared absorption spectrum of a polymer was determined by using an infrared spectroscopic analyzer [manufactured by PerkinElmer, U.S. LLC, trade name: Spectrum 100 (ATR method)] at a wave number of 400 to 4000 cm⁻¹ and a cumulative number of 8.

### [Number average molecular weight of a polymer]

A number-average molecular weight of a polymer was determined by gel permeation chromatography (GPC). More specifically, the number-average molecular weight of the polymer was determined by using N,N-dimethylformamide containing 0.01 mol/L of lithium bromide as a solvent by means of a GPC measurement device provided with a refractive index detector [manufactured by JASCO Corporation, product number: RI-2031 Plus] and an ultraviolet detector [manufactured by JASCO Corporation, product number: UV-2075 Plus] as a device [a column manufactured by Showa Denko K.K. under the trade name of Shodex KD-802.5 was connected with a column manufactured by Showa Denko K.K. under the trade name of Shodex KD-804]. Incidentally, polymethyl methacrylate (molecular weight: 1450, 2000, 8000, 20000, 80000, 200000, 800000 or 1000000 g/mol) was used as an external standard.

### [Properties of a polymer]

### (1) Determination of differential scanning calorimetry (DSC)

A differential scanning calorimetry was performed by using a differential scanning calorimetry device [manufactured by Seiko Instruments Inc., trade name: EXSTAR DSC 6100] in nitrogen gas atmosphere within a temperature range of 25 to 300°C at a heating rate of 10°C/min. A glass transition temperature (Tg), a crystallization temperature (Tc) and a melting point (Tm) of a polymer were determined from the result of the differential scanning calorimetry.

### (2) Thermogravimetric analysis (TGA), 5% weight loss temperature (T_{d5}) and 10% weight loss temperature (T_{d10})

A thermogravimetric analysis was performed by using a thermogravimetric analysis device [manufactured by Seiko Instruments Inc., trade number: SSC/5200SII] in nitrogen gas atmosphere within a temperature range of 25 to 800°C at a heating rate of 10°C/min. A 5% weight loss temperature and a 10% weight loss temperature were determined from the result of the thermogravimetric analysis. Incidentally, the 5% weight loss temperature means a temperature at which the mass of a sample (polymer) decreases by 5%, and the 10% weight loss temperature means a temperature at which the mass of a sample (polymer) decreases by 10%.

### (3) Tensile strength, elongation at break and Young's modulus of a filament

A tensile strength of a filament was determined by using a filament having a fiber diameter of about 200 pm and a length of 40 mm, pulling the filament at a crosshead speed of 1 mm/sec at room temperature with a tensile testing machine [manufactured by Illinois Tool Works Inc., trade number: 3365-L5], and measuring the maximum intensity of the filament until the filament was broken. An elongation at break of the filament was a value as determined by measuring a length of the filament when the filament is broken in determining the tensile strength of the filament, dividing the length of the filament at break by the original length of the filament, and multiplying an obtained value by 100. Young's modulus was determined from an initial inclination of a stress-strain curve.

### Example 1

A mixture was prepared by mixing 0.9 mol of itaconic acid, 0.1 mol of 1,10-decanedicarboxylic acid (a dicarboxylic acid compound represented by the formula (II) in which R² is an alkylene group having 10 carbon atoms) and 1 mol of hexamethylenediamine. The resulting mixture was dissolved in 200 mL of ethanol, to give a solution. A reaction of the solution was carried out at a liquid temperature of 60°C for 8 hours under stirring, to give a mixed solution.

The mixed solution obtained in the above was cooled to 25°C, to precipitate a white solid reaction product. The mixed solution was filtrated to collect the reaction product. The reaction product was washed with ethanol of about 10°C, and thereafter dried with a vacuum dryer at 40°C for 12 hours.

Next, 20 g of the reaction product obtained in the above was mixed with 0.2 g of sodium dihydrogen phosphate as a catalyst for 1 hour in nitrogen gas atmosphere. While the pressure of the reaction atmosphere was reduced, the resulting mixture was heated at 180°C for 1 hour, and then at 250°C for 4 hours under stirring, to give a polyamide-based random copolymer (hereinafter referred to as polymer A) having the recurring unit represented by the formula (IIIa) in which R¹ was an alkylene group having 6 carbon atoms and the recurring unit represented by the formula (IIIb) in which R¹ was an alkylene group having 6 carbon atoms, and R² was an alkylene group having 10 carbon atoms.

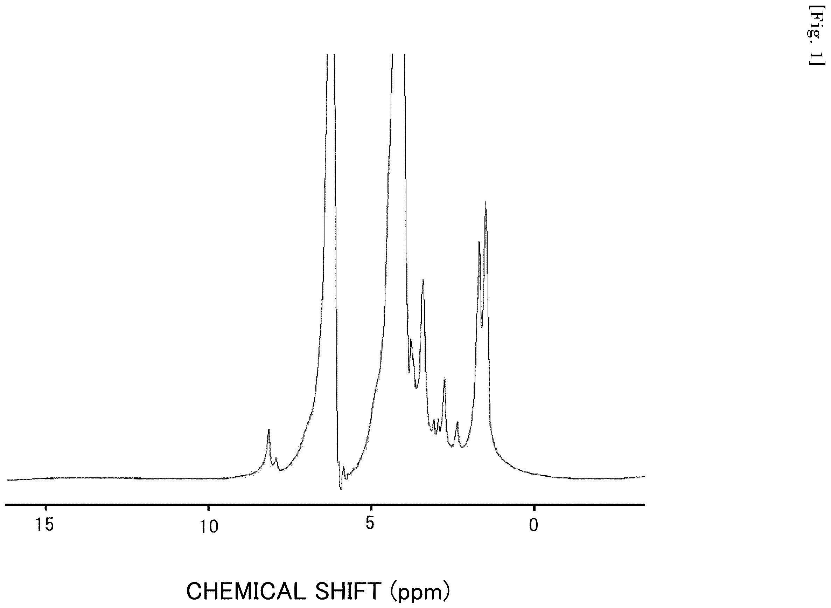

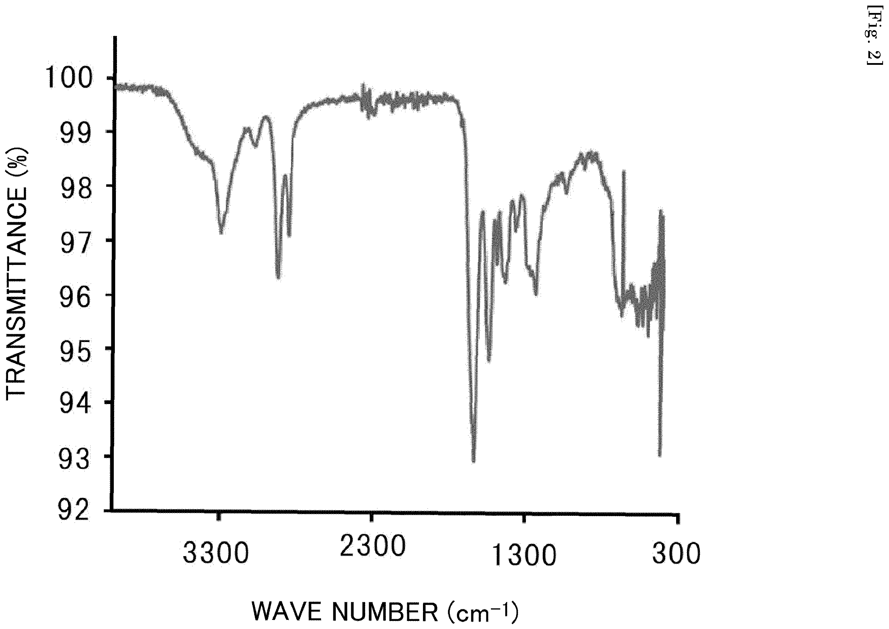

A nuclear magnetic resonance (¹H-NMR) spectrum of the polymer A is shown in Fig. 1, and an infrared absorption spectrum of the polymer A is shown in Fig. 2.

From the above results, it was found that the polymer A had the recurring unit represented by the formula (IIIa) and the recurring unit represented by the formula (IIIb), that a molar ratio of the recurring unit represented by the formula (IIIa) to the recurring unit represented by the formula (IIIb) [recurring unit represented by the formula (IIIa)/recurring unit represented by the formula (IIIb)] was 9/1, and that a number average molecular weight of the polymer A was 2700000.

### Example 2

A mixture was prepared by mixing 0.8 mol of itaconic acid, 0.2 mol of 1,10-decanedicarboxylic acid and 1 mol of hexamethylenediamine. A polyamide-based random copolymer (hereinafter referred to as polymer B) having the recurring unit represented by the formula (IIIa) in which R¹ was an alkylene group having 6 carbon atoms and the recurring unit represented by the formula (IIIb) in which R¹ was an alkylene group having 6 carbon atoms, and R² was an alkylene group having 10 carbon atoms was prepared by using the mixture obtained in the above in the same manner as in Example 1.

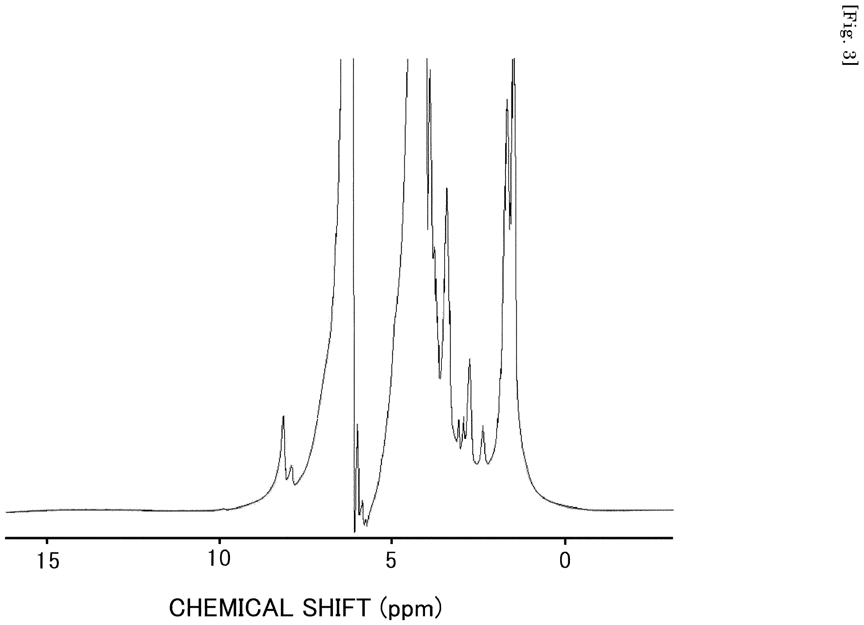

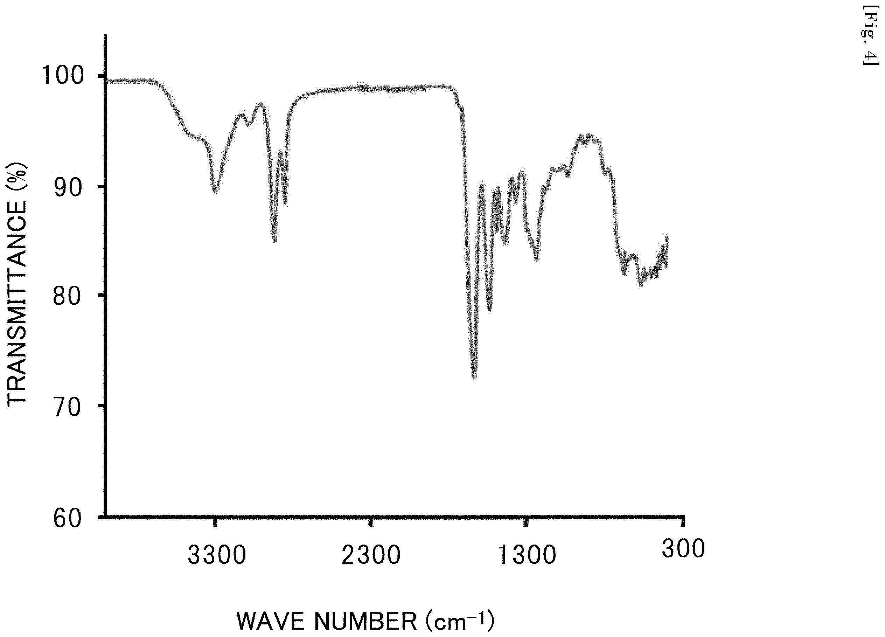

A nuclear magnetic resonance (¹H-NMR) spectrum of the polymer B is shown in Fig. 3, and an infrared absorption spectrum of the polymer B is shown in Fig. 4.

From the above results, it was found that the polymer B had the recurring unit represented by the formula (IIIa) and the recurring unit represented by the formula (IIIb), that a molar ratio of the recurring unit represented by the formula (IIIa) to the recurring unit represented by the formula (IIIb) [recurring unit represented by the formula (IIIa)/recurring unit represented by the formula (IIIb)] was 8/2, and that a number average molecular weight of the polymer B was 2800000.

### Example 3

A mixture was prepared by mixing 0.7 mol of itaconic acid, 0.3 mol of 1,10-decanedicarboxylic acid and 1 mol of hexamethylenediamine. A polyamide-based random copolymer (hereinafter referred to as polymer C) having the recurring unit represented by the formula (IIIa) in which R¹ was an alkylene group having 6 carbon atoms and the recurring unit represented by the formula (IIIb) in which R¹ was an alkylene group having 6 carbon atoms, and R² was an alkylene group having 10 carbon was prepared by using the mixture obtained in the above in the same manner as in Example 1.

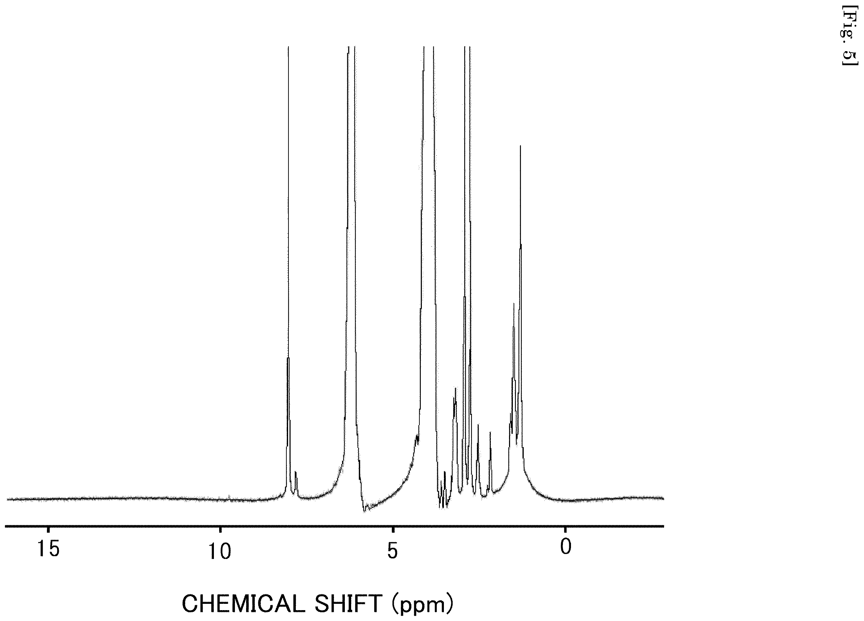

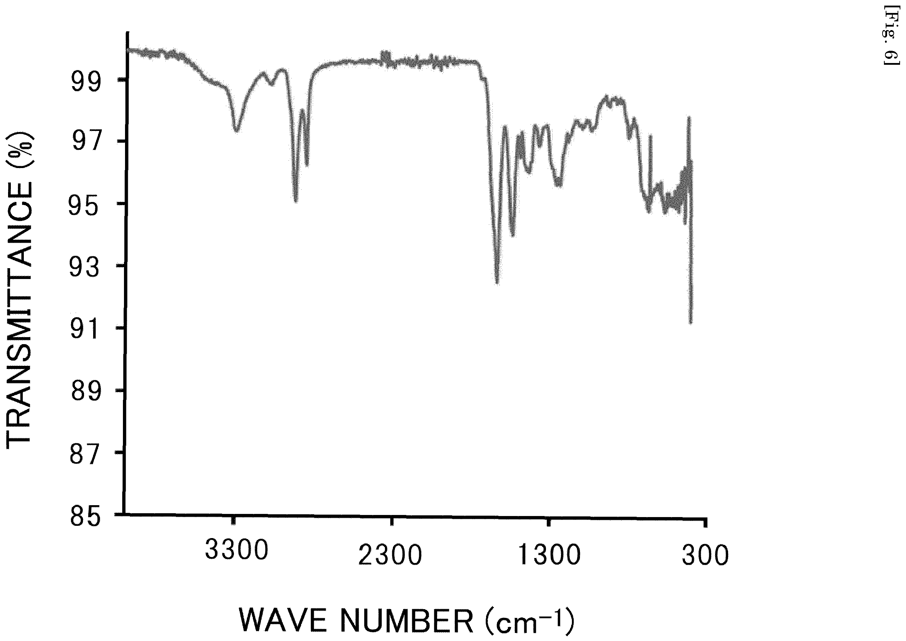

A nuclear magnetic resonance (¹H-NMR) spectrum of the polymer C is shown in Fig. 5, and an infrared absorption spectrum of the polymer C is shown in Fig. 6.

From the above results, it was found that the polymer C had the recurring unit represented by the formula (IIIa) and the recurring unit represented by the formula (IIIb), that a molar ratio of the recurring unit represented by the formula (IIIa) to the recurring unit represented by the formula (IIIb) [recurring unit represented by the formula (IIIa)/recurring unit represented by the formula (IIIb)] was 7/3, and that a number average molecular weight of the polymer C was 2720000.

### Example 4

A mixture was prepared by mixing 0.6 mol of itaconic acid, 0.4 mol of 1,10-decanedicarboxylic acid and 1 mol of hexamethylenediamine. A polyamide-based random copolymer (hereinafter referred to as polymer D) having the recurring unit represented by the formula (IIIa) in which R¹ was an alkylene group having 6 carbon atoms and the recurring unit represented by the formula (IIIb) in which R¹ was an alkylene group having 6 carbon atoms, and R² was an alkylene group having 10 carbon was prepared by using the mixture obtained in the above in the same manner as in Example 1.

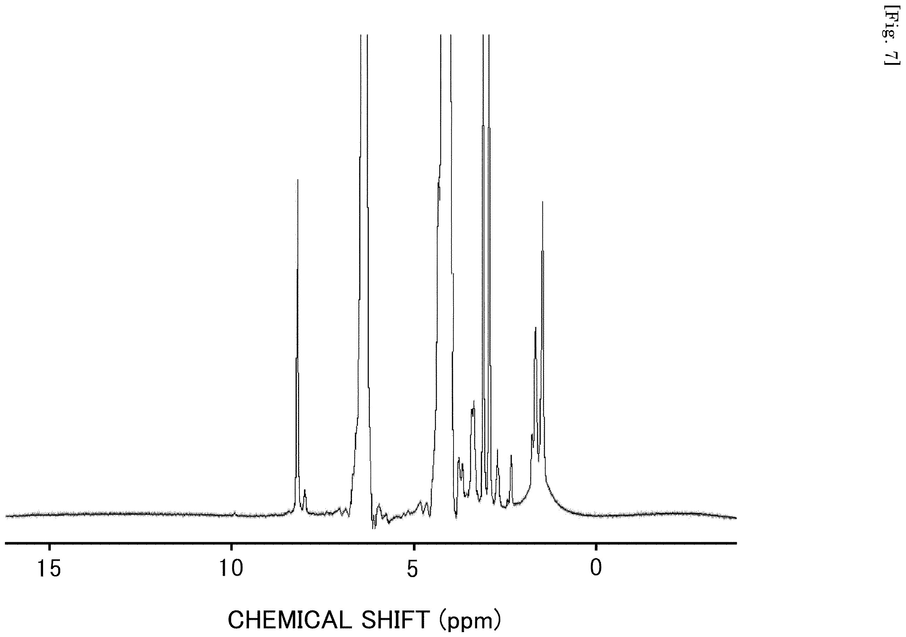

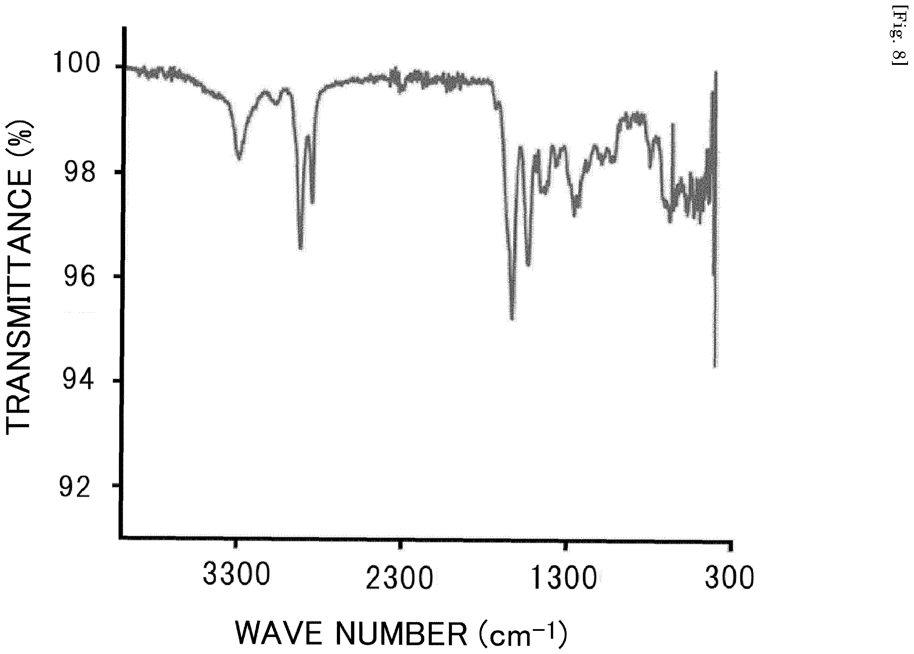

A nuclear magnetic resonance (¹H-NMR) spectrum of the polymer D is shown in Fig. 7, and an infrared absorption spectrum of the polymer D is shown in Fig. 8.

From the above results, it was found that the polymer D had the recurring unit represented by the formula (IIIa) and the recurring unit represented by the formula (IIIb), that a molar ratio of the recurring unit represented by the formula (IIIa) to the recurring unit represented by the formula (IIIb) [recurring unit represented by the formula (IIIa)/recurring unit represented by the formula (IIIb)] was 6/4, and that a number average molecular weight of the polymer D was 2730000.

### Example 5

A mixture was prepared by mixing 0.5 mol of itaconic acid, 0.5 mol of 1,10-decanedicarboxylic acid and 1 mol of hexamethylenediamine. A polyamide-based random copolymer (hereinafter referred to as polymer E) having the recurring unit represented by the formula (IIIa) in which R¹ was an alkylene group having 6 carbon atoms and the recurring unit represented by the formula (IIIb) in which R¹ was an alkylene group having 6 carbon atoms, and R² was an alkylene group having 10 carbon atoms was prepared by using the mixture obtained in the above in the same manner as in Example 1.

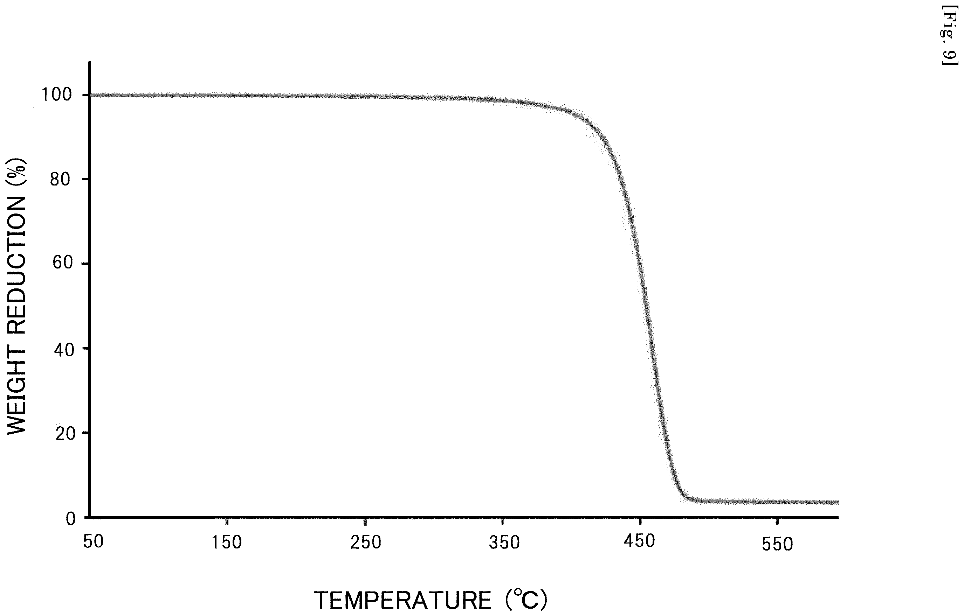

A thermogravimetric analysis of the reaction product was performed when the reaction product was heated. The thermogravimetric analysis was performed based on a method described later. The result is shown in Fig. 9. Fig. 9 is a graph showing the result of thermogravimetric analysis when the reaction product was heated.

From the result shown in Fig. 9, the weight loss of the reaction product was found at a temperature of about 150°C or higher. Therefore, it can be seen that dehydration condensation of the reaction product was initiated, and thereby the polymer E was generated. In addition, since the weight of the resulting polymer E was reduced from about 405°C, it can be seen that the polymer E was decomposed at a temperature equal to or higher than this temperature.

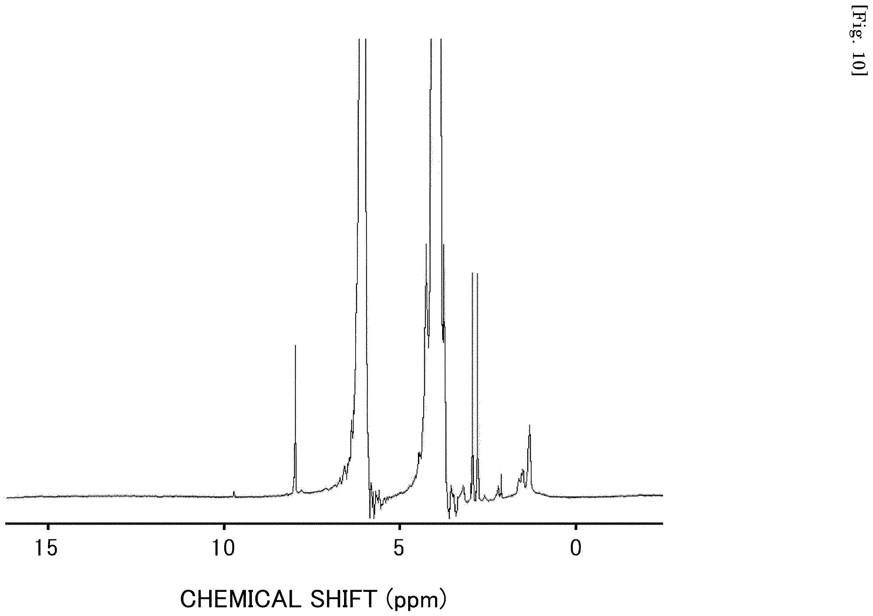

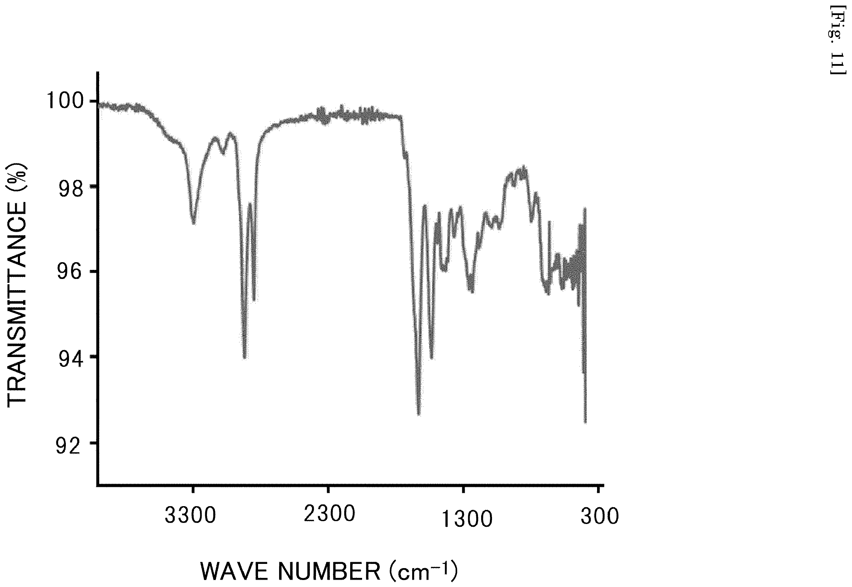

A nuclear magnetic resonance (¹H-NMR) spectrum of the polymer E is shown in Fig. 10, and an infrared absorption spectrum of the polymer E is shown in Fig. 11.

From the above results, it was found that the polymer E had the recurring unit represented by the formula (IIIa) and the recurring unit represented by the formula (IIIb), that a molar ratio of the recurring unit represented by the formula (IIIa) to the recurring unit represented by the formula (IIIb) [recurring unit represented by the formula (IIIa)/recurring unit represented by the formula (IIIb)] was 5/5, and that a number average molecular weight of the polymer E was 273500.

### Example 6

A mixture was prepared by mixing 0.4 mol of itaconic acid, 0.6 mol of 1,10-decanedicarboxylic acid and 1 mol of hexamethylenediamine. The resulting mixture was dissolved in 200 mL of ethanol, to give a solution. A reaction of the solution was carried out at a liquid temperature of 60°C for 8 hours under stirring, to give a mixed solution.

The mixed solution obtained in the above was cooled to 25°C, to precipitate a white solid reaction product. The mixed solution was filtrated to collect the reaction product. The reaction product was washed with ethanol of about 10°C, and thereafter dried with a vacuum dryer at 40°C for 12 hours.

Next, 20 g of the reaction product obtained in the above was mixed with 0.2 g of sodium dihydrogen phosphate as a catalyst for 1 hour in nitrogen gas atmosphere. While the pressure of the reaction atmosphere was reduced, the temperature of the resulting mixture was increased from 25°C, and the resulting mixture was heated at 180°C for 1 hour.
Thereafter, the temperature of the mixture was further continuously increased, and the mixture was heated at 250°C for 4 hours. The temperature of the mixture was further continuously increased up to 800°C, to give a polyamide-based random copolymer (hereinafter referred to as polymer F) having the recurring unit represented by the formula (IIIa) in which R¹ was an alkylene group having 6 carbon atoms and the recurring unit represented by the formula (IIIb) in which R¹ was an alkylene group having 6 carbon atoms, and R² was an alkylene group having 10 carbon atoms.

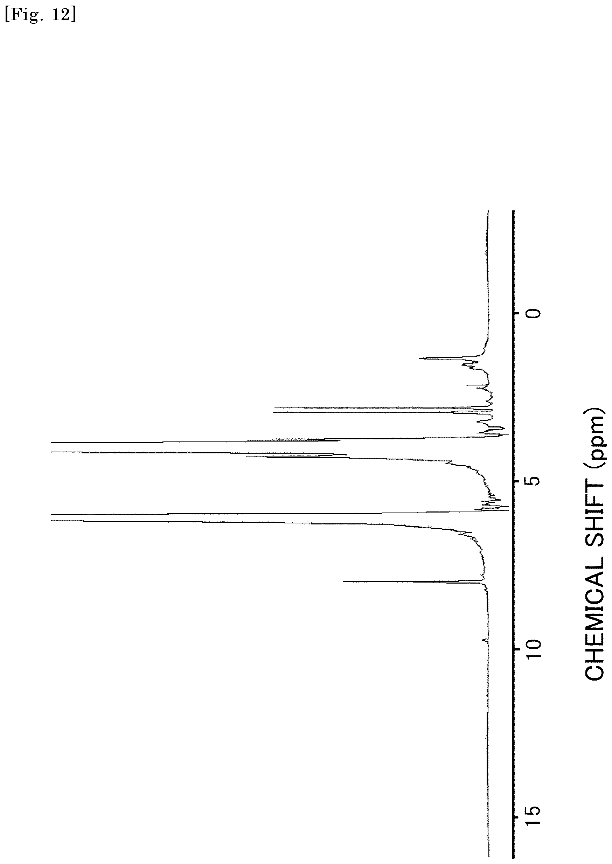

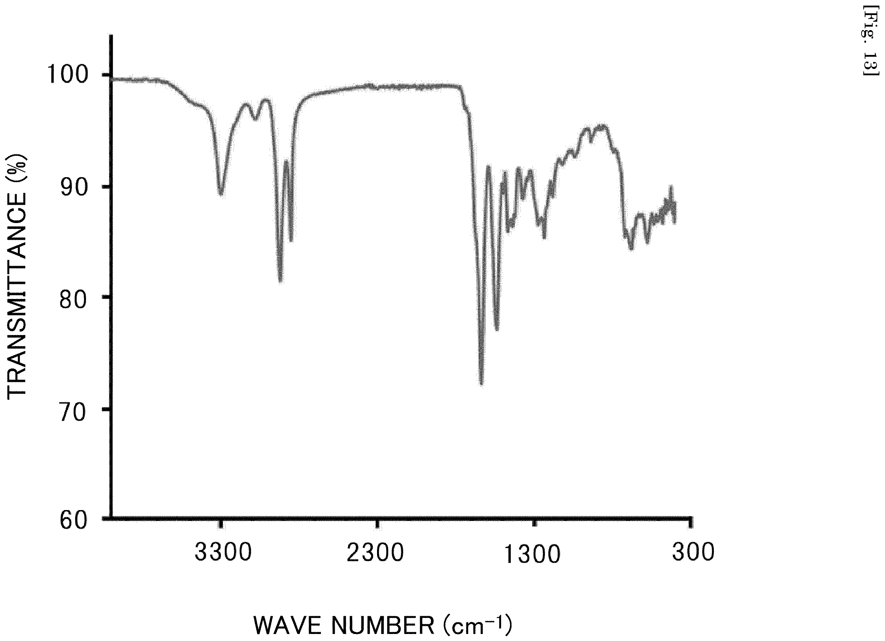

A nuclear magnetic resonance (¹H-NMR) spectrum of the polymer F is shown in Fig. 12, and an infrared absorption spectrum of the polymer F is shown in Fig. 13.

From the above results, it was found that the polymer F had the recurring unit represented by the formula (IIIa) and the recurring unit represented by the formula (IIIb), that a molar ratio of the recurring unit represented by the formula (IIIa) to the recurring unit represented by the formula (IIIb) [recurring unit represented by the formula (IIIa)/recurring unit represented by the formula (IIIb)] was 4/6, and that a number average molecular weight of the polymer F was 2750000.

### Example 7

A mixture was prepared by mixing 0.3 mol of itaconic acid, 0.7 mol of 1,10-decanedicarboxylic acid and 1 mol of hexamethylenediamine. A polyamide-based random copolymer (hereinafter referred to as polymer G) having the recurring unit represented by the formula (IIIa) in which R¹ was an alkylene group having 6 carbon atoms and the recurring unit represented by the formula (IIIb) in which R¹ was an alkylene group having 6 carbon atoms, and R² was an alkylene group having 10 carbon atoms was prepared by using the mixture obtained in the above in the same manner as in Example 1.

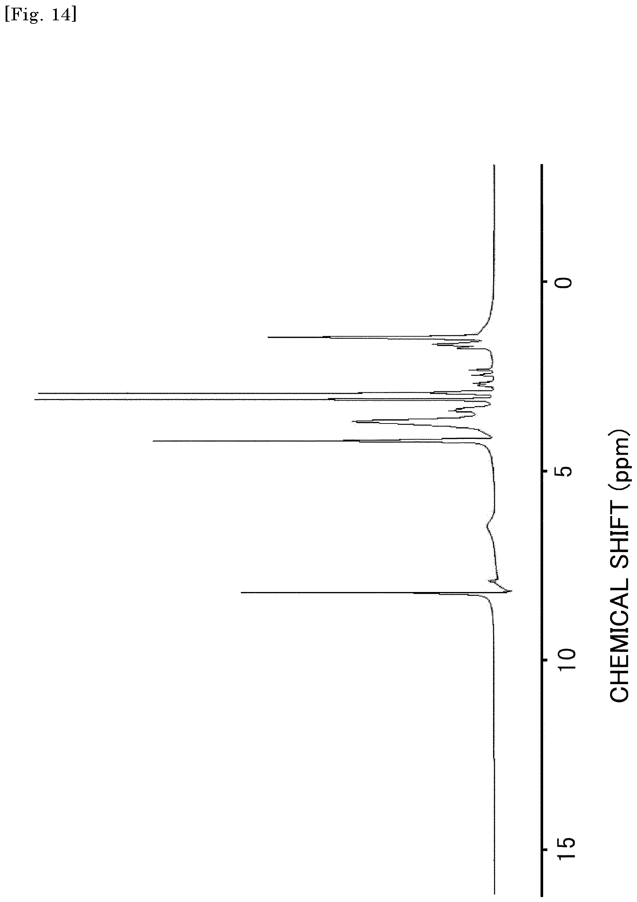

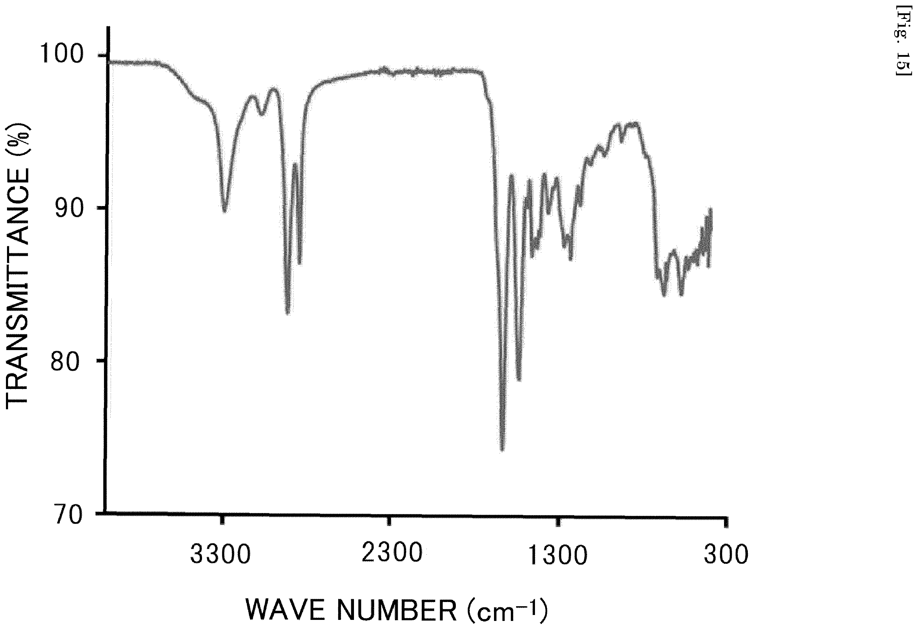

A nuclear magnetic resonance (1H-NMR) spectrum of the polymer G is shown in Fig. 14, and an infrared absorption spectrum of the polymer G is shown in Fig. 15.

From the above results, it was found that the polymer G had the recurring unit represented by the formula (IIIa) and the recurring unit represented by the formula (IIIb), that a molar ratio of the recurring unit represented by the formula (IIIa) to the recurring unit represented by the formula (IIIb) [recurring unit represented by the formula (IIIa)/recurring unit represented by the formula (IIIb)] was 3/7, and that a number average molecular weight of the polymer G was 2760000.

### Example 8

A mixture was prepared by mixing 0.2 mol of itaconic acid, 0.8 mol of 1,10-decanedicarboxylic acid and 1 mol of hexamethylenediamine. A polyamide-based random copolymer (hereinafter referred to as polymer H) having the recurring unit represented by the formula (IIIa) in which R¹ was an alkylene group having 6 carbon atoms and the recurring unit represented by the formula (IIIb) in which R¹ was an alkylene group having 6 carbon atoms, and R² was an alkylene group having 10 carbon atoms was prepared by using the mixture obtained in the above in the same manner as in Example 1.

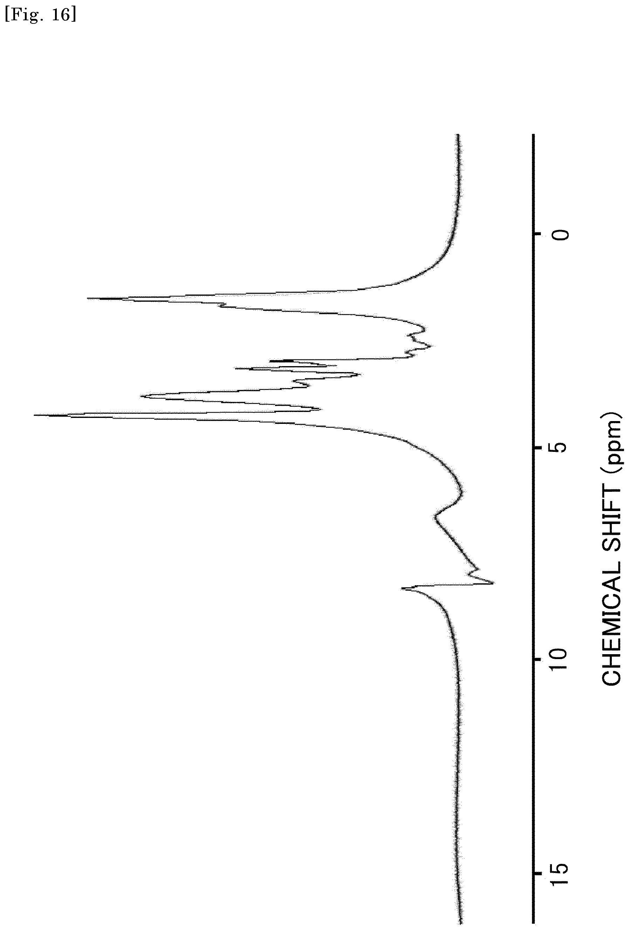

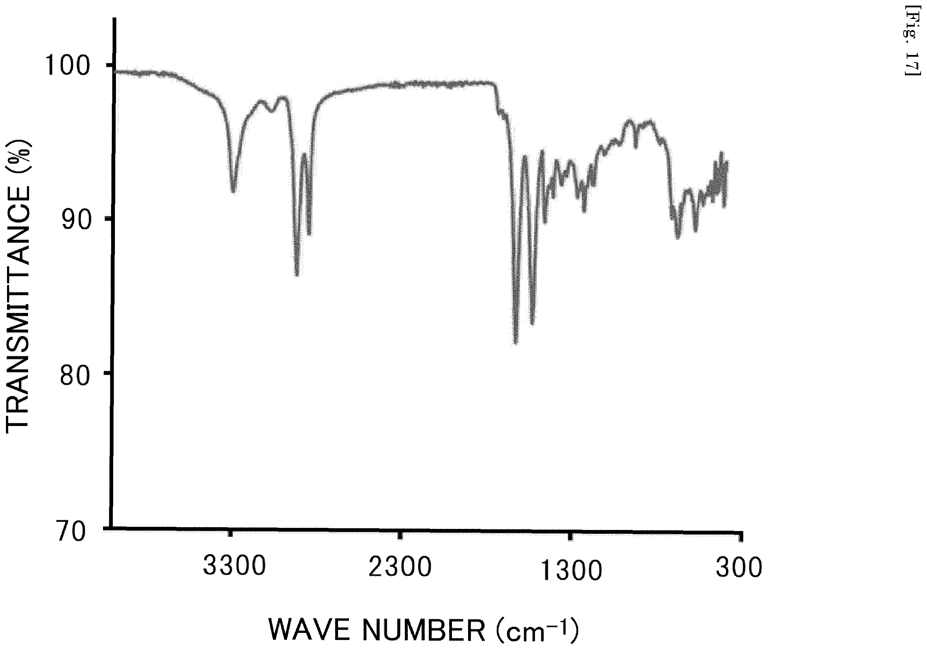

A nuclear magnetic resonance (¹H-NMR) spectrum of the polymer H is shown in Fig. 16, and an infrared absorption spectrum of the polymer H is shown in Fig. 17.

From the above results, it was found that the polymer H had the recurring unit represented by the formula (IIIa) and the recurring unit represented by the formula (IIIb), that a molar ratio of the recurring unit represented by the formula (IIIa) to the recurring unit represented by the formula (IIIb) [recurring unit represented by the formula (IIIa)/recurring unit represented by the formula (IIIb)] was 2/8, and that a number average molecular weight of the polymer H was 2750000.

### Example 9

A mixture was prepared by mixing 0.1 mol of itaconic acid, 0.9 mol of 1,10-decanedicarboxylic acid and 1 mol of hexamethylenediamine. A polyamide-based random copolymer (hereinafter referred to as polymer I) having the recurring unit represented by the formula (IIIa) in which R¹ was an alkylene group having 6 carbon atoms and the recurring unit represented by the formula (IIIb) in which R¹ was an alkylene group having 6 carbon atoms, and R² was an alkylene group having 10 carbon atoms was prepared by using the mixture obtained in the above in the same manner as in Example 1.

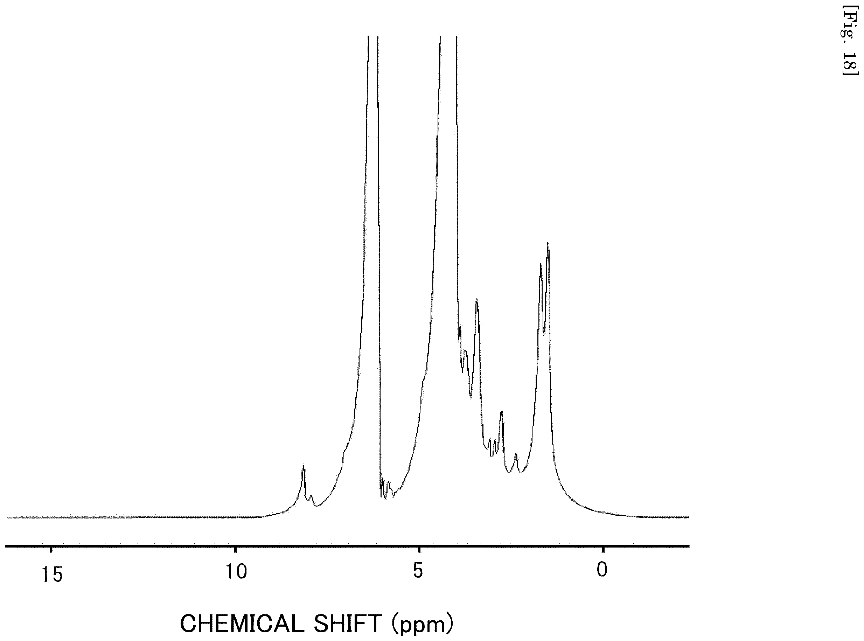

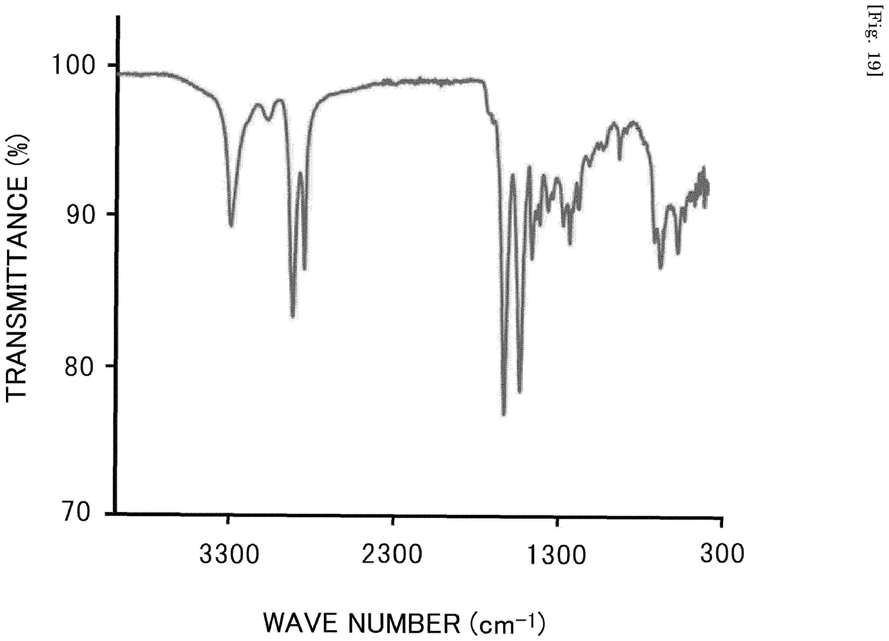

A nuclear magnetic resonance (¹H-NMR) spectrum of the polymer I is shown in Fig. 18, and an infrared absorption spectrum of the polymer I is shown in Fig. 19.

From the above results, it was found that the polymer I had the recurring unit represented by the formula (IIIa) and the recurring unit represented by the formula (IIIb), that a molar ratio of the recurring unit represented by the formula (IIIa) to the recurring unit represented by the formula (IIIb) [recurring unit represented by the formula (IIIa)/recurring unit represented by the formula (IIIb)] was 1/9, and that a number average molecular weight of the polymer I was 2720000.

### Example 10

A mixture was prepared by mixing 0.5 mol of itaconic acid, 0.5 mol of 1,12-dodecanedicarboxylic acid (a dicarboxylic acid compound represented by the formula (II) in which R² is an alkylene group having 12 carbon atoms) and 1 mol of 1,10-decanediamine. The resulting mixture was dissolved in 200 mL of ethanol to give a solution, and the reaction of the solution was carried out at a liquid temperature of 60°C for 8 hours under stirring to give a mixed solution.

The mixed solution obtained in the above was cooled to 25°C, to precipitate a white solid reaction product. The mixed solution was filtrated to collect the reaction product. The reaction product was washed with ethanol of about 10°C, and thereafter dried with a vacuum dryer at 40°C for 12 hours.

Next, 20 g of the reaction product obtained in the above was mixed with 0.2 g of sodium dihydrogen phosphate as a catalyst for 1 hour in nitrogen gas atmosphere. While the pressure of the reaction atmosphere was reduced, the resulting mixture was heated at 180°C for 1 hour, and then at 250°C for 4 hours under stirring, to give a polyamide-based random copolymer (hereinafter referred to as polymer J) having the recurring unit represented by the formula (IIIa) in which R¹ was an alkylene group having 10 carbon atoms and the recurring unit represented by the formula (IIIb) in which R¹ was an alkylene group having 10 carbon atoms, and R² was an alkylene group having 12 carbon atoms.

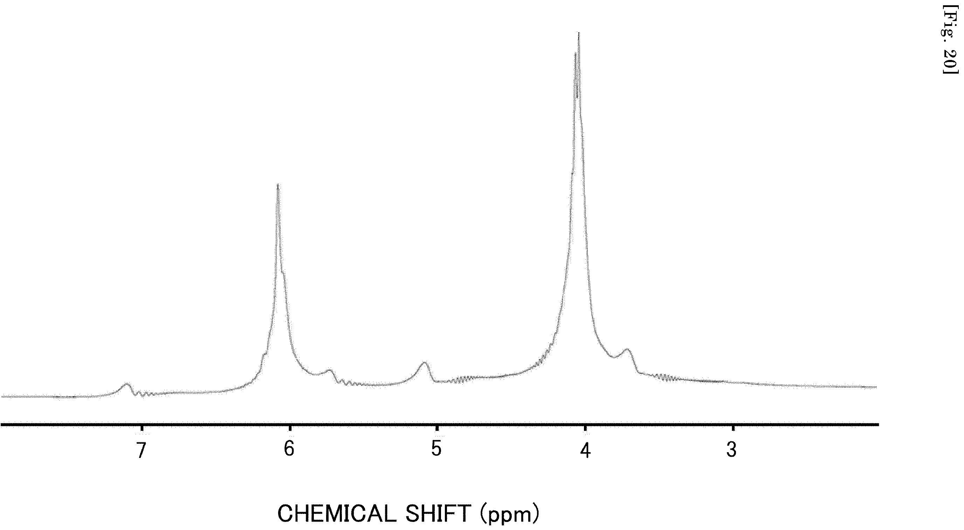

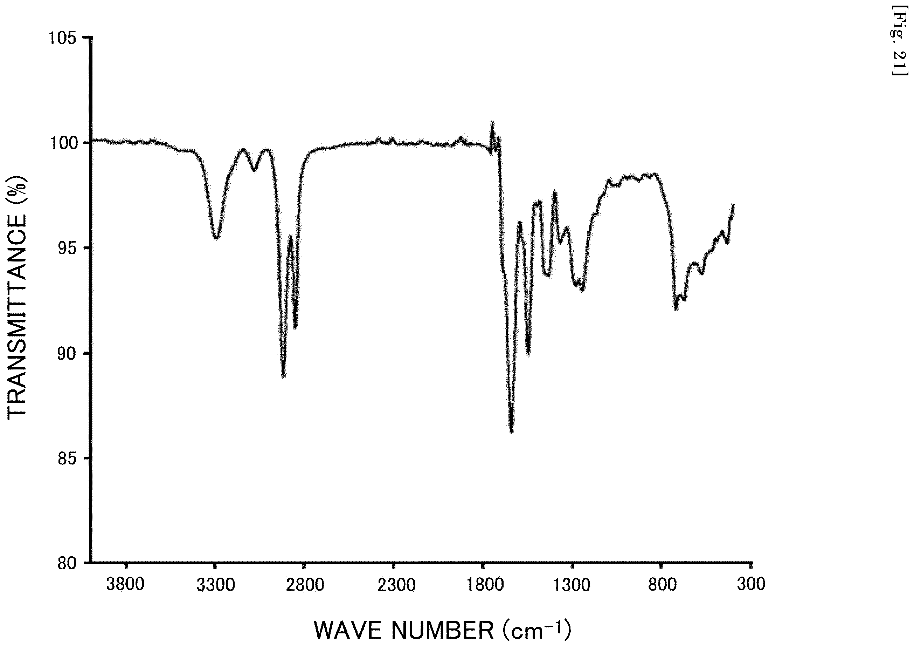

A nuclear magnetic resonance (¹H-NMR) spectrum of the polymer J is shown in Fig. 20, and an infrared absorption spectrum of the polymer J is shown in Fig. 21.

From the above results, it was found that the polymer J had the recurring unit represented by the formula (IIIa) and the recurring unit represented by the formula (IIIb), that a molar ratio of the recurring unit represented by the formula (IIIa) to the recurring unit represented by the formula (IIIb) [recurring unit represented by the formula (IIIa)/recurring unit represented by the formula (IIIb)] was 5/5, and that a number average molecular weight of the polymer J was 2800000.

### Example 11

A mixture was prepared by mixing 0.5 mol of itaconic acid, 0.5 mol of 1,12-dodecanedicarboxylic acid (a dicarboxylic acid compound represented by the formula (II) in which R² is an alkylene group having 12 carbon atoms) and 1 mol of 1,12-dodecanediamine. The resulting mixture was dissolved in 200 mL of ethanol to give a solution, and the reaction of the solution was carried out at a liquid temperature of 60°C for 8 hours under stirring to give a mixed solution.

The mixed solution obtained in the above was cooled to 25°C, to precipitate a white solid reaction product. The mixed solution was filtrated to collect the reaction product. The reaction product was washed with ethanol of about 10°C, and thereafter dried with a vacuum dryer at 40°C for 12 hours.

Next, 20 g of the reaction product obtained in the above was mixed with 0.2 g of sodium dihydrogen phosphate as a catalyst for 1 hour in nitrogen gas atmosphere. While the pressure of the reaction atmosphere was reduced, the resulting mixture was heated at 180°C for 1 hour, and then at 250°C for 4 hours under stirring, to give a polyamide-based random copolymer (hereinafter referred to as polymer K) having the recurring unit represented by the formula (IIIa) in which R¹ was an alkylene group having 12 carbon atoms and the recurring unit represented by the formula (IIIb) in which each of R¹ and R² was an alkylene group having 12 carbon atoms, respectively.

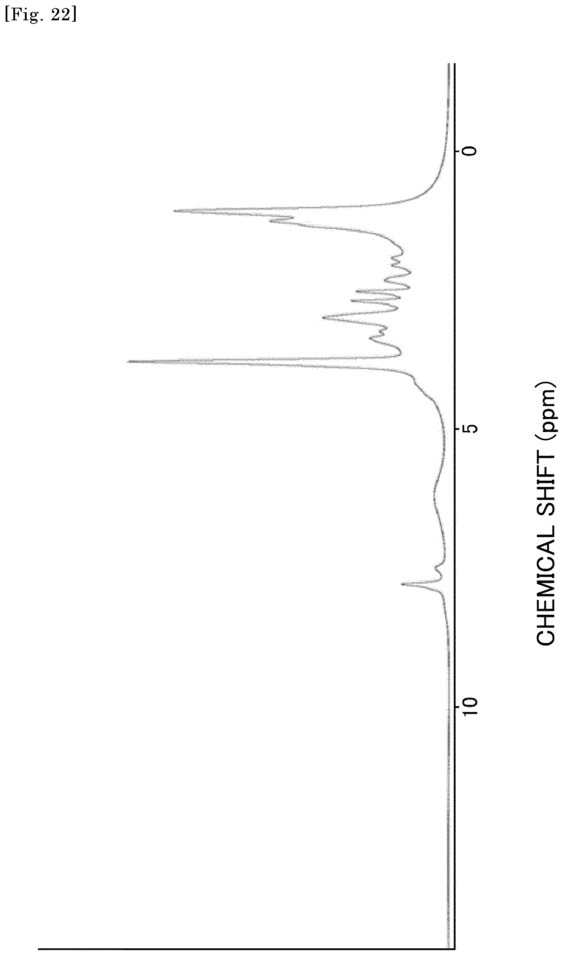

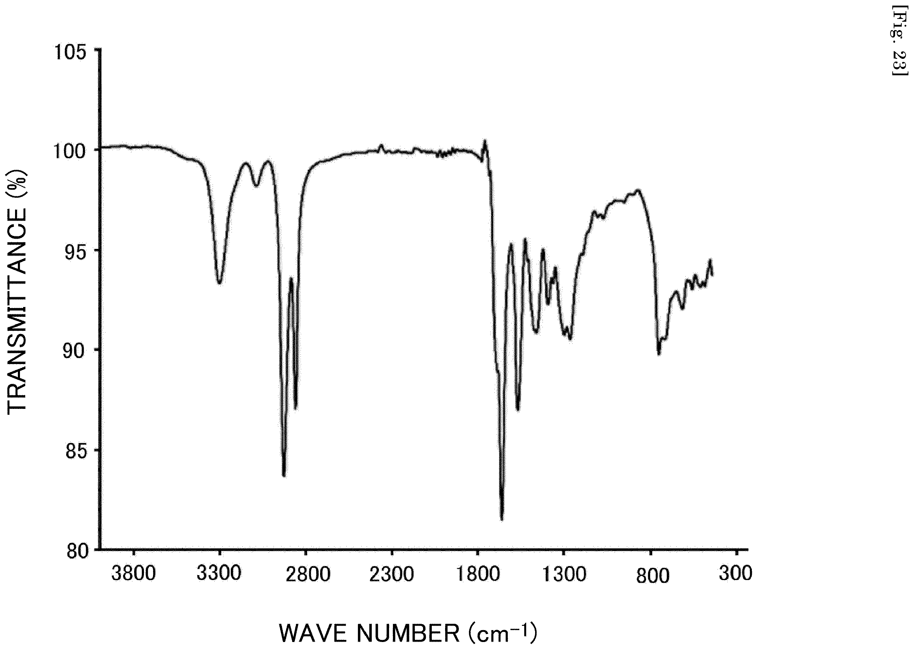

A nuclear magnetic resonance (¹H-NMR) spectrum of the polymer K is shown in Fig. 22, and an infrared absorption spectrum of the polymer K is shown in Fig. 23.

### Example 12

A mixture was prepared by mixing 0.5 mol of itaconic acid, 0.5 mol of 1,14-tetradecanedicarboxylic acid (a dicarboxylic acid compound represented by the formula (II) in which R² is an alkylene group having 14 carbon atoms) and 1 mol of 1,6-hexamethylenediamine. The resulting mixture was dissolved in 200 mL of ethanol to give a solution, and the reaction of the solution was carried out at a liquid temperature of 60°C for 8 hours under stirring to give a mixed solution.

The mixed solution obtained in the above was cooled to 25°C, to precipitate a white solid reaction product. The mixed solution was filtrated to collect the reaction product. The reaction product was washed with ethanol of about 10°C, and thereafter dried with a vacuum dryer at 40°C for 12 hours.

Next, 20 g of the reaction product obtained in the above was mixed with 0.2 g of sodium dihydrogen phosphate as a catalyst for 1 hour in nitrogen gas atmosphere. While the pressure of the reaction atmosphere was reduced, the resulting mixture was heated at 180°C for 1 hour, and then at 250°C for 4 hours under stirring, to give a polyamide-based random copolymer (hereinafter referred to as polymer L) having the recurring unit represented by the formula (IIIa) in which R¹ was an alkylene group having 6 carbon atoms and the recurring unit represented by the formula (IIIb) in which R¹ was an alkylene group having 6 carbon atoms, and R² was an alkylene group having 14 carbon atoms.

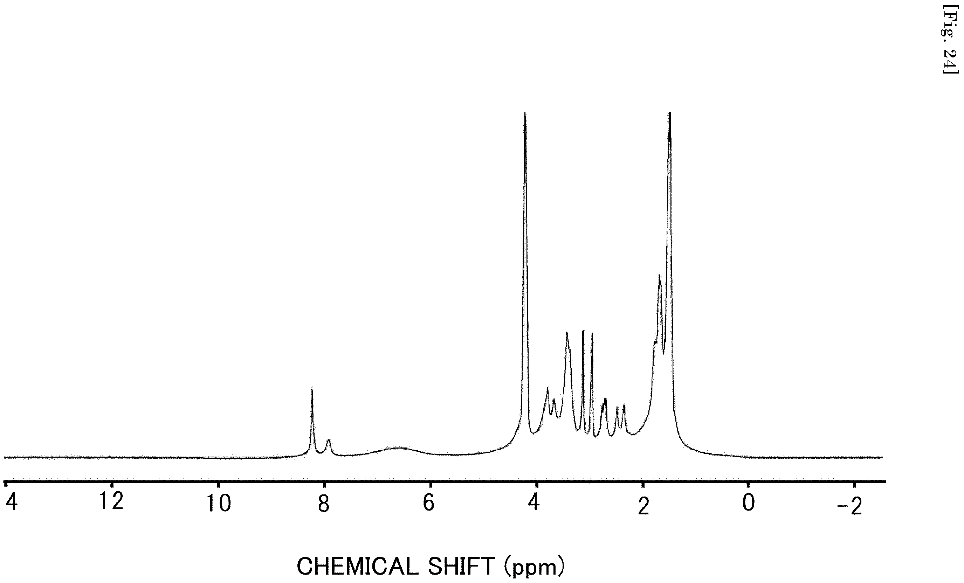

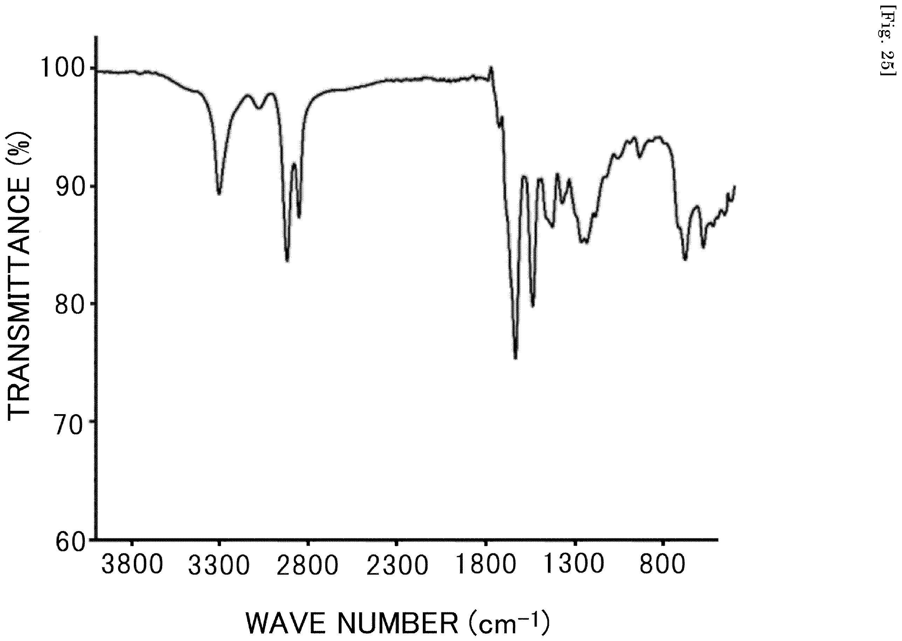

A nuclear magnetic resonance (¹H-NMR) spectrum of the polymer L is shown in Fig. 24, and an infrared absorption spectrum of the polymer L is shown in Fig. 25.

From the above results, it was found that the polymer L had the recurring unit represented by the formula (IIIa) and the recurring unit represented by the formula (IIIb), that a molar ratio of the recurring unit represented by the formula (IIIa) to the recurring unit represented by the formula (IIIb) [recurring unit represented by the formula (IIIa)/recurring unit represented by the formula (IIIb)] was 5/5, and that a number average molecular weight of the polymer L was 2780000.

### Example 13

A mixture was prepared by mixing 0.5 mol of itaconic acid, 0.5 mol of 1,16-hexadecanedicarboxylic acid (a dicarboxylic acid compound represented by the formula (II) in which R² is an alkylene group having 16 carbon atoms) and 1 mol of 1,6-hexamethylenediamine. The resulting mixture was dissolved in 200 mL of ethanol to give a solution, and the reaction of the solution was carried out at a liquid temperature of 60°C for 8 hours under stirring to give a mixed solution.

The mixed solution obtained in the above was cooled to 25°C, to precipitate a white solid reaction product. The mixed solution was filtrated to collect the reaction product. The reaction product was washed with ethanol of about 10°C, and thereafter dried with a vacuum dryer at 40°C for 12 hours.

Next, 20 g of the reaction product obtained in the above was mixed with 0.2 g of sodium dihydrogen phosphate as a catalyst for 1 hour in nitrogen gas atmosphere. While the pressure of the reaction atmosphere was reduced, the resulting mixture was heated at 180°C for 1 hour, and then at 250°C for 4 hours under stirring, to give a polyamide-based random copolymer (hereinafter referred to as polymer M) having the recurring unit represented by the formula (IIIa) in which R¹ was an alkylene group having 6 carbon atoms and the recurring unit represented by the formula (IIIb) in which R¹ was an alkylene group having 6 carbon atoms, and R² was an alkylene group having 16 carbon atoms.

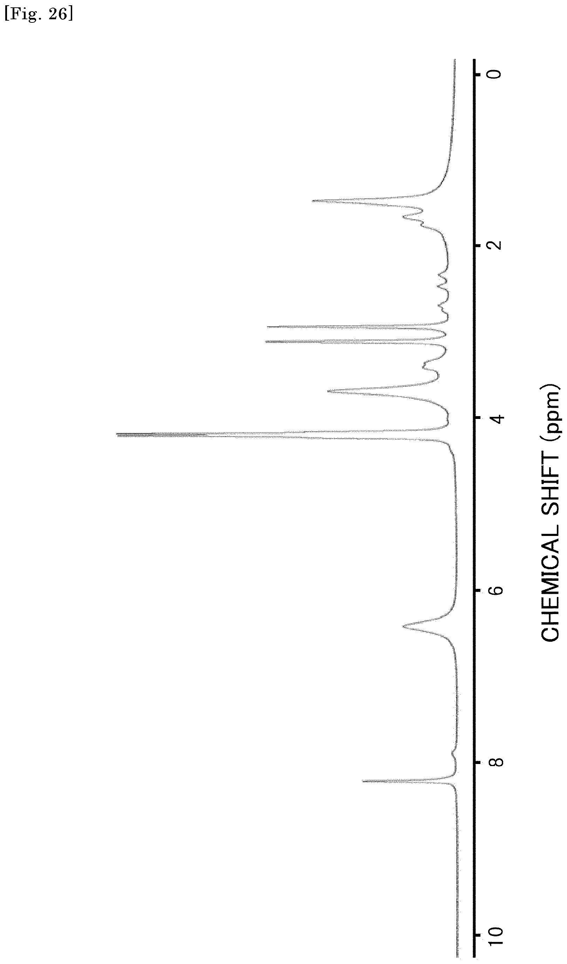

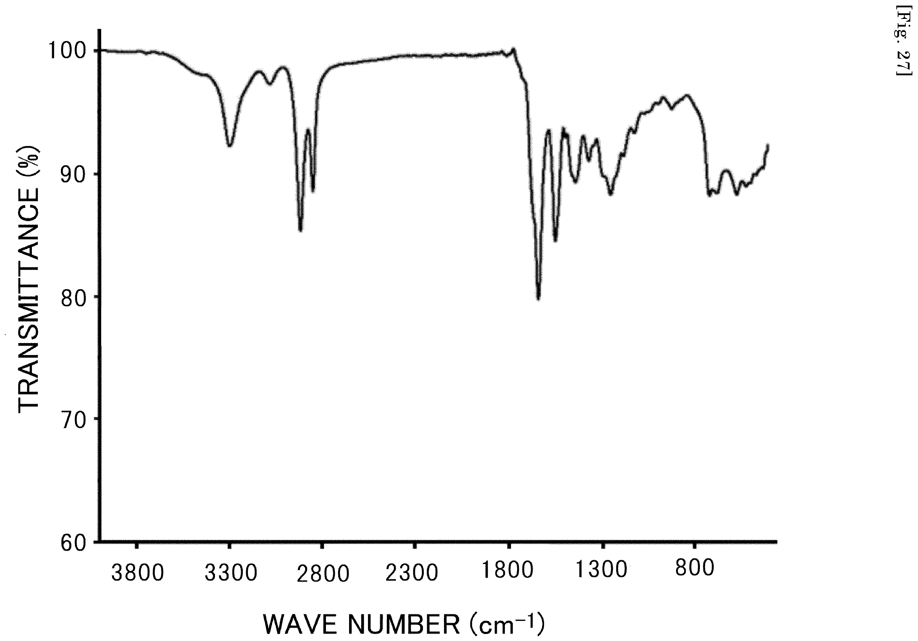

A nuclear magnetic resonance (¹H-NMR) spectrum of the polymer M is shown in Fig. 26, and an infrared absorption spectrum of the polymer M is shown in Fig. 27.

From the above results, it was found that the polymer M had the recurring unit represented by the formula (IIIa) and the recurring unit represented by the formula (IIIb), that a molar ratio of the recurring unit represented by the formula (IIIa) to the recurring unit represented by the formula (IIIb) [recurring unit represented by the formula (IIIa)/recurring unit represented by the formula (IIIb)] was 5/5, and that a number average molecular weight of the polymer M was 2800000.

### Example 14

A mixture was prepared by mixing 0.5 mol of itaconic acid, 0.5 mol of 1,18-octadecanedicarboxylic acid (a dicarboxylic acid compound represented by the formula (II) in which R² is an alkylene group having 18 carbon atoms) and 1 mol of 1,6-hexamethylenediamine. The resulting mixture was dissolved in 200 mL of ethanol to give a solution, and the reaction of the solution was carried out at a liquid temperature of 60°C for 8 hours under stirring to give a mixed solution.

The mixed solution obtained in the above was cooled to 25°C, to precipitate a white solid reaction product. The mixed solution was filtrated to collect the reaction product. The reaction product was washed with ethanol of about 10°C, and thereafter dried with a vacuum dryer at 40°C for 12 hours.

Next, 20 g of the reaction product obtained in the above was mixed with 0.2 g of sodium dihydrogen phosphate as a catalyst for 1 hour in nitrogen gas atmosphere. While the pressure of the reaction atmosphere was reduced, the resulting mixture was heated at 180°C for 1 hour, and then at 250°C for 4 hours under stirring, to give a polyamide-based random copolymer (hereinafter referred to as polymer N) having the recurring unit represented by the formula (IIIa) in which R¹ was an alkylene group having 6 carbon atoms and the recurring unit represented by the formula (IIIb) in which R¹ was an alkylene group having 6 carbon atoms, and R² was an alkylene group having 18 carbon atoms.

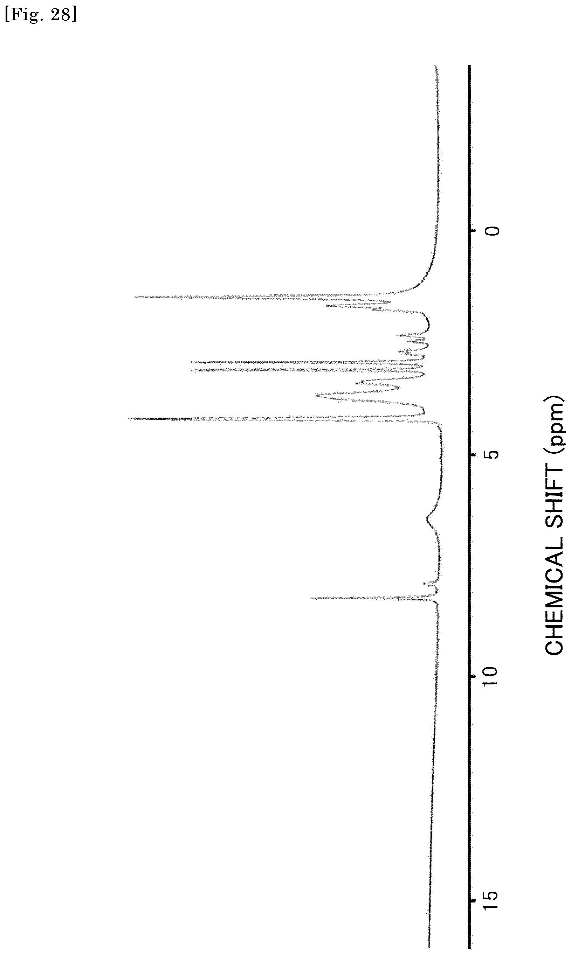

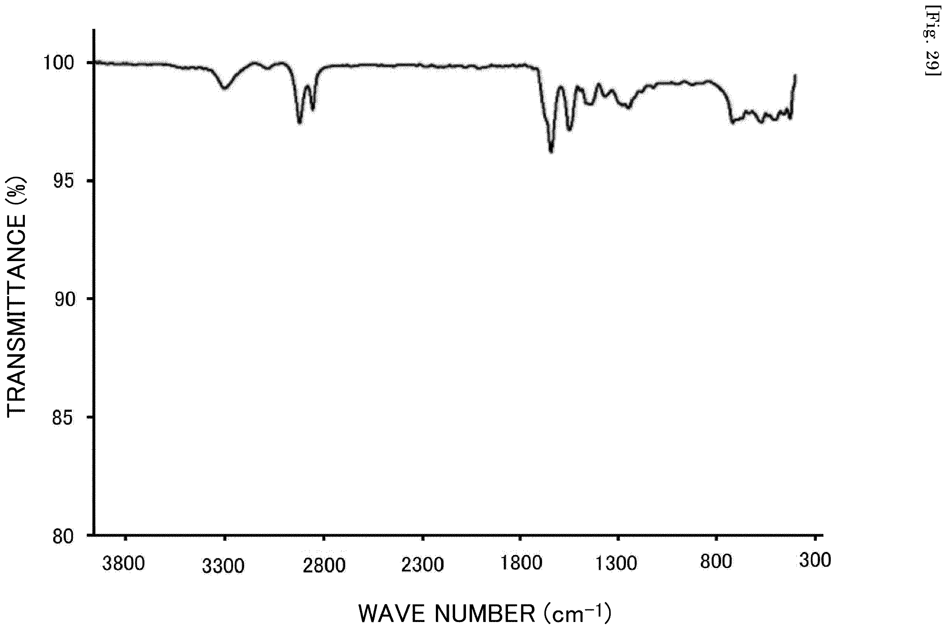

A nuclear magnetic resonance (¹H-NMR) spectrum of the polymer N is shown in Fig. 28, and an infrared absorption spectrum of the polymer N is shown in Fig. 29.

From the above results, it was found that the polymer N had the recurring unit represented by the formula (IIIa) and the recurring unit represented by the formula (IIIb), that a molar ratio of the recurring unit represented by the formula (IIIa) to the recurring unit represented by the formula (IIIb) [recurring unit represented by the formula (IIIa)/recurring unit represented by the formula (IIIb)] was 5/5, and that a number average molecular weight of the polymer N was 2850000.

### Example 15

A mixture was prepared by mixing 0.5 mol of itaconic acid, 0.5 mol of 1,20-eicosanedicarboxylic acid (a dicarboxylic acid compound represented by the formula (II) in which R² is an alkylene group having 20 carbon atoms) and 1 mol of 1,6-hexamethylenediamine. The resulting mixture was dissolved in 200 mL of ethanol to give a solution, and the reaction of the solution was carried out at a liquid temperature of 60°C for 8 hours under stirring to give a mixed solution.

The mixed solution obtained in the above was cooled to 25°C, to precipitate a white solid reaction product. The mixed solution was filtrated to collect the reaction product. The reaction product was washed with ethanol of about 10°C, and thereafter dried with a vacuum dryer at 40°C for 12 hours.

Next, 20 g of the reaction product obtained in the above was mixed with 0.2 g of sodium dihydrogen phosphate as a catalyst for 1 hour in nitrogen gas atmosphere. While the pressure of the reaction atmosphere was reduced, the resulting mixture was heated at 180°C for 1 hour, and then at 250°C for 4 hours under stirring, to give a polyamide-based random copolymer (hereinafter referred to as polymer O) having the recurring unit represented by the formula (IIIa) in which R¹ was an alkylene group having 6 carbon atoms and the recurring unit represented by the formula (IIIb) in which R¹ was an alkylene group having 6 carbon atoms, and R² was an alkylene group having 20 carbon atoms.

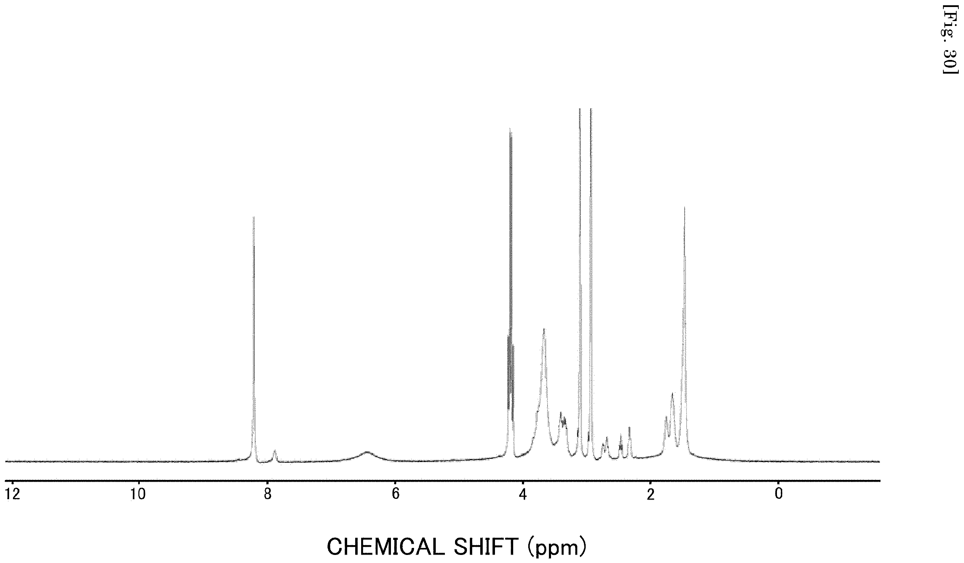

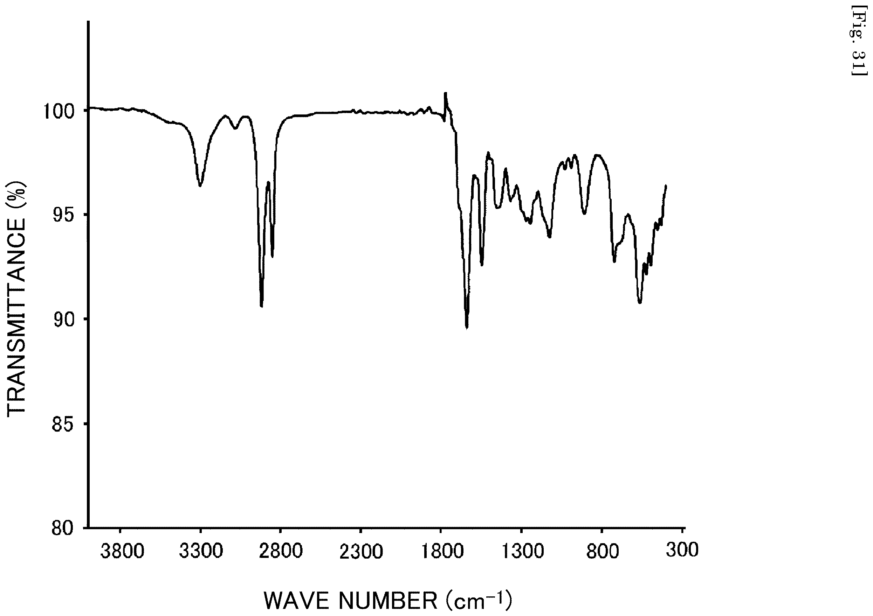

A nuclear magnetic resonance (¹H-NMR) spectrum of the polymer O is shown in Fig. 30, and an infrared absorption spectrum of the polymer O is shown in Fig. 31.

From the above results, it was found that the polymer O had the recurring unit represented by the formula (IIIa) and the recurring unit represented by the formula (IIIb), that a molar ratio of the recurring unit represented by the formula (IIIa) to the recurring unit represented by the formula (IIIb) [recurring unit represented by the formula (IIIa)/recurring unit represented by the formula (IIIb)] was 5/5, and that a number average molecular weight of the polymer O was 2900000.

### Comparative Example 1

A mixture was prepared by mixing 1 mol of itaconic acid and 1 mol of hexamethylenediamine. The resulting mixture was dissolved in 200 mL of ethanol to give a solution, and the reaction of the solution was carried out at a liquid temperature of 60°C for 8 hours under stirring to give a mixed solution.

The mixed solution obtained in the above was cooled to 25°C, to precipitate a reaction product. The mixed solution was filtrated to collect the reaction product. The reaction product was washed with ethanol of about 10°C, and thereafter dried with a vacuum dryer at 40°C for 12 hours.

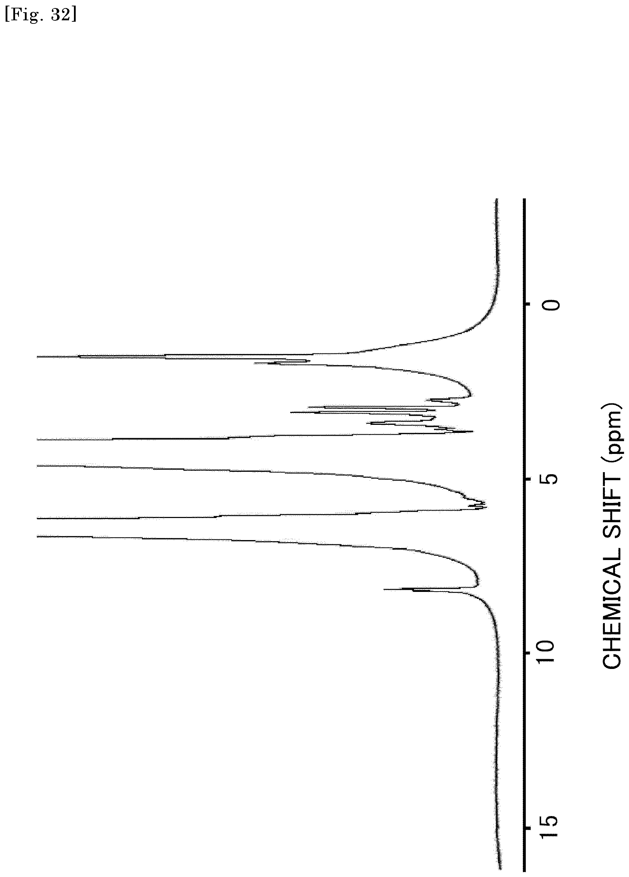

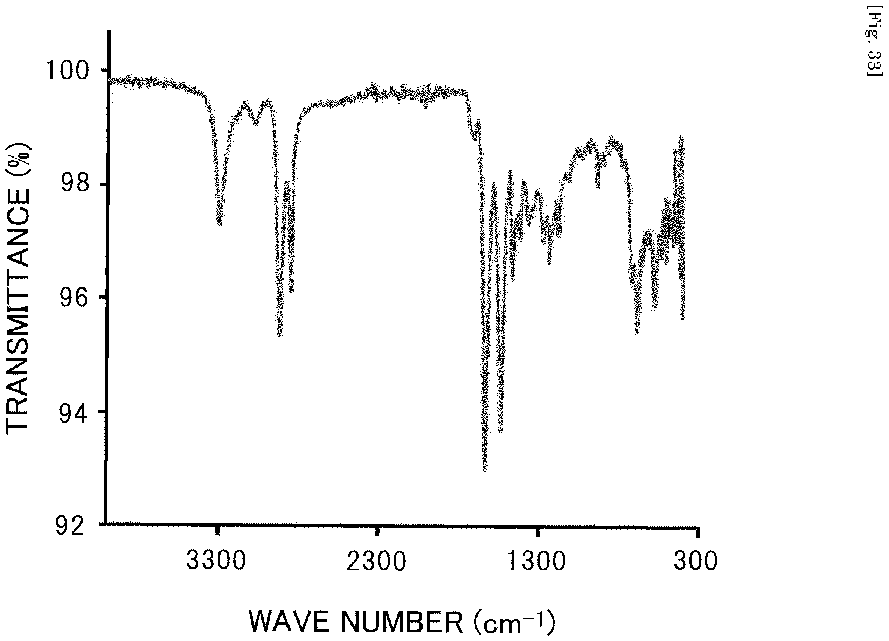

Next, 20 g of the reaction product obtained in the above was mixed with 0.2 g of sodium dihydrogen phosphate as a catalyst for 1 hour in nitrogen gas atmosphere. While the pressure of the reaction atmosphere was reduced, the resulting mixture was heated at 180°C for 1 hour, and then at 250°C for 4 hours under stirring, to give an itaconic acid-hexamethylene diamine copolymer (hereinafter referred to as polymer P). The number average molecular weight of the polymer P was 2800000. A nuclear magnetic resonance (¹H-NMR) spectrum of the polymer P is shown in Fig. 32, and an infrared absorption spectrum of the polymer P is shown in Fig. 33.

### Comparative Example 2

A mixture was prepared by mixing 1 mol of 1,10-decanedicarboxylic acid and 1 mol of hexamethylenediamine. The resulting mixture was dissolved in 200 mL of ethanol to give a solution, and the reaction of the solution was carried out at a liquid temperature of 60°C for 8 hours under stirring to give a mixed solution.

The mixed solution obtained in the above was cooled to 25°C, to precipitate a reaction product. The mixed solution was filtrated to collect the reaction product. The reaction product was washed with ethanol of about 10°C, and thereafter dried with a vacuum dryer at 40°C for 12 hours.

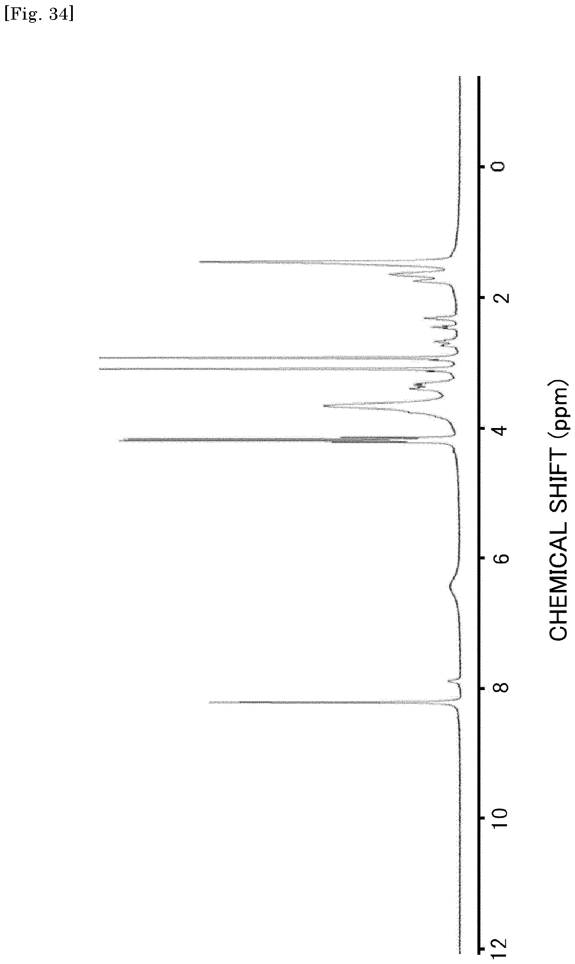

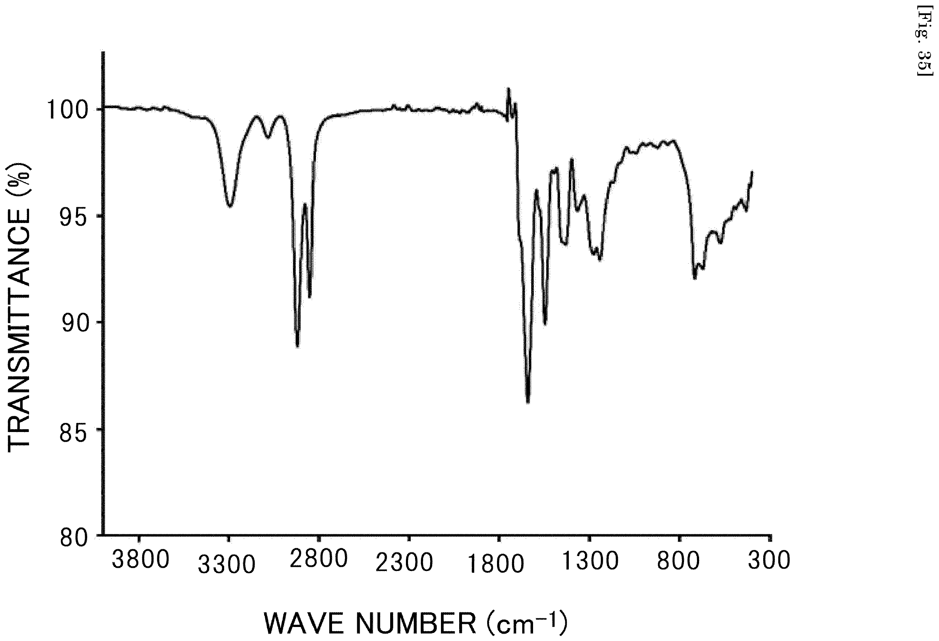

Next, 20 g of the reaction product obtained in the above was mixed with 0.2 g of sodium dihydrogen phosphate as a catalyst for 1 hour in nitrogen gas atmosphere. While the pressure of the reaction atmosphere was reduced, the resulting mixture was heated at 180°C for 1 hour, and then at 250°C for 4 hours under stirring, to give a 1,10-decanedicarboxylic acid-hexamethylenediamine copolymer (hereinafter referred to as polymer Q). The number average molecular weight of the polymer Q was 2820000. A nuclear magnetic resonance (¹H-NMR) spectrum of the polymer Q is shown in Fig. 34, and an infrared absorption spectrum of the polymer Q is shown in Fig. 35.

### Comparative Example 3

A mixture was prepared by mixing 1 mol of itaconic acid and 1 mol of 1,8-octadiamine. The resulting mixture was dissolved in 200 mL of ethanol to give a solution, and the reaction of the solution was carried out at a liquid temperature of 60°C for 8 hours under stirring to give a mixed solution.

The mixed solution obtained in the above was cooled to 25°C, to precipitate a reaction product. The mixed solution was filtrated to collect the reaction product. The reaction product was washed with ethanol of about 10°C, and thereafter dried with a vacuum dryer at 40°C for 12 hours.

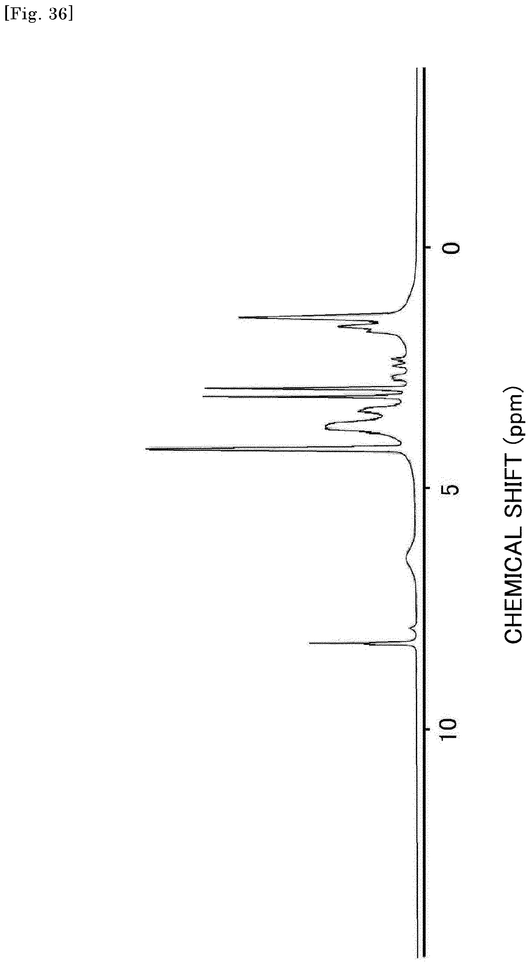

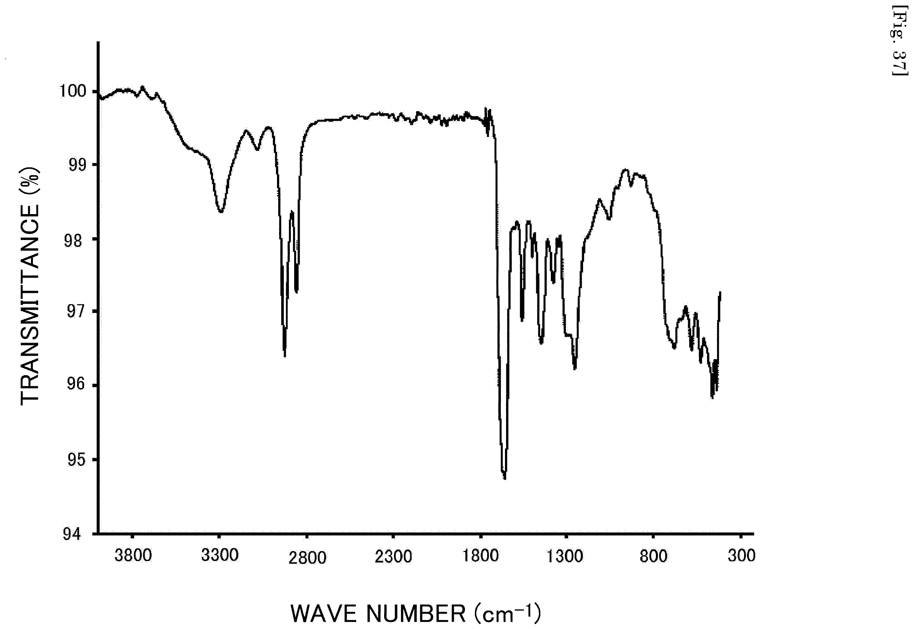

Next, 20 g of the reaction product obtained in the above was mixed with 0.2 g of sodium dihydrogen phosphate as a catalyst for 1 hour in nitrogen gas atmosphere. While the pressure of the reaction atmosphere was reduced, the resulting mixture was heated at 180°C for 1 hour, and then at 250°C for 4 hours under stirring, to give a polyamide-based random copolymer (hereinafter referred to as polymer R). The number average molecular weight of the polymer R was 2800000. A nuclear magnetic resonance (¹H-NMR) spectrum of the polymer R is shown in Fig. 36, and an infrared absorption spectrum of the polymer R is shown in Fig. 37.

### Comparative Example 4

A mixture was prepared by mixing 1 mol of itaconic acid and 1 mol of 1,10-decanediamine. The resulting mixture was dissolved in 200 mL of ethanol to give a solution, and the reaction of the solution was carried out at a liquid temperature of 60°C for 8 hours under stirring to give a mixed solution.

The mixed solution obtained in the above was cooled to 25°C, to precipitate a reaction product. The mixed solution was filtrated to collect the reaction product. The reaction product was washed with ethanol of about 10°C, and thereafter dried with a vacuum dryer at 40°C for 12 hours.

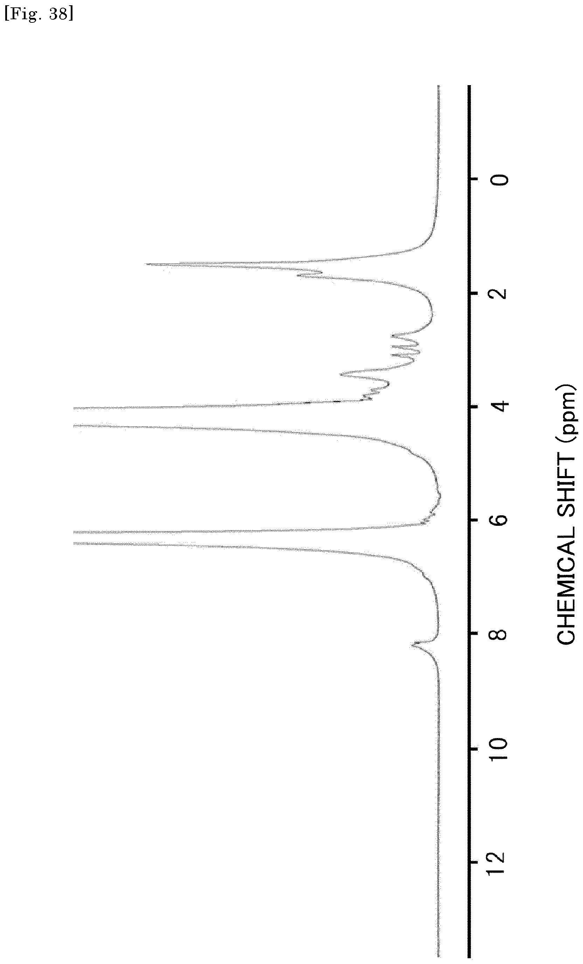

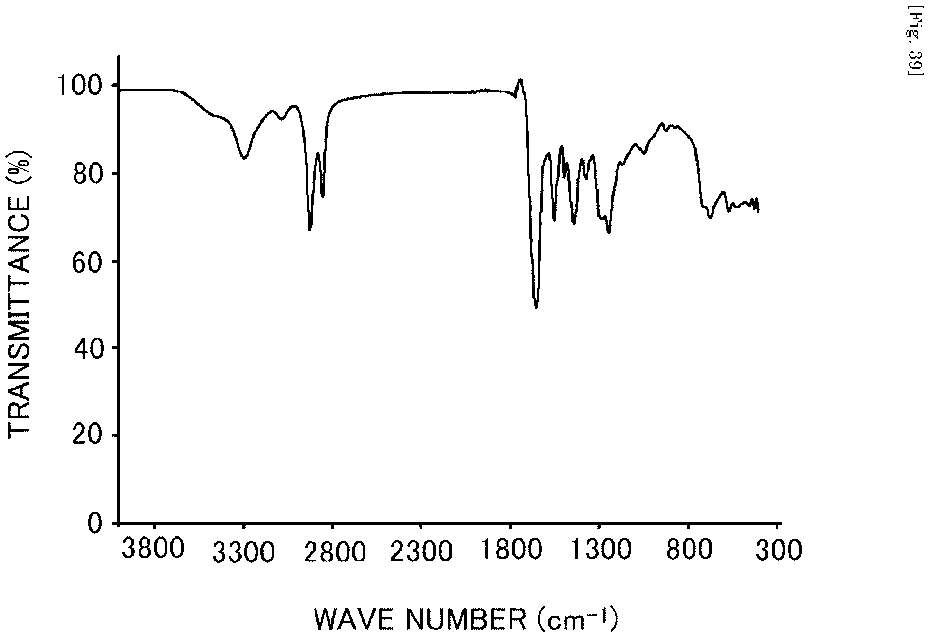

Next, 20 g of the reaction product obtained in the above was mixed with 0.2 g of sodium dihydrogen phosphate as a catalyst for 1 hour in nitrogen gas atmosphere. While the pressure of the reaction atmosphere was reduced, the resulting mixture was heated at 180°C for 1 hour, and then at 250°C for 4 hours under stirring, to give a polyamide-based random copolymer (hereinafter referred to as polymer S). The number average molecular weight of the polymer S was 2700000. A nuclear magnetic resonance (¹H-NMR) spectrum of the polymer S is shown in Fig. 38, and an infrared absorption spectrum of the polymer S is shown in Fig. 39.

### Comparative Example 5

A mixture was prepared by mixing 1 mol of itaconic acid and 1 mol of 1,12-dodecanediamine. The resulting mixture was dissolved in 200 mL of ethanol to give a solution, and the reaction of the solution was carried out at a liquid temperature of 60°C for 8 hours under stirring to give a mixed solution.

The mixed solution obtained in the above was cooled to 25°C, to precipitate a reaction product. The mixed solution was filtrated to collect the reaction product. The reaction product was washed with ethanol of about 10°C, and thereafter dried with a vacuum dryer at 40°C for 12 hours.

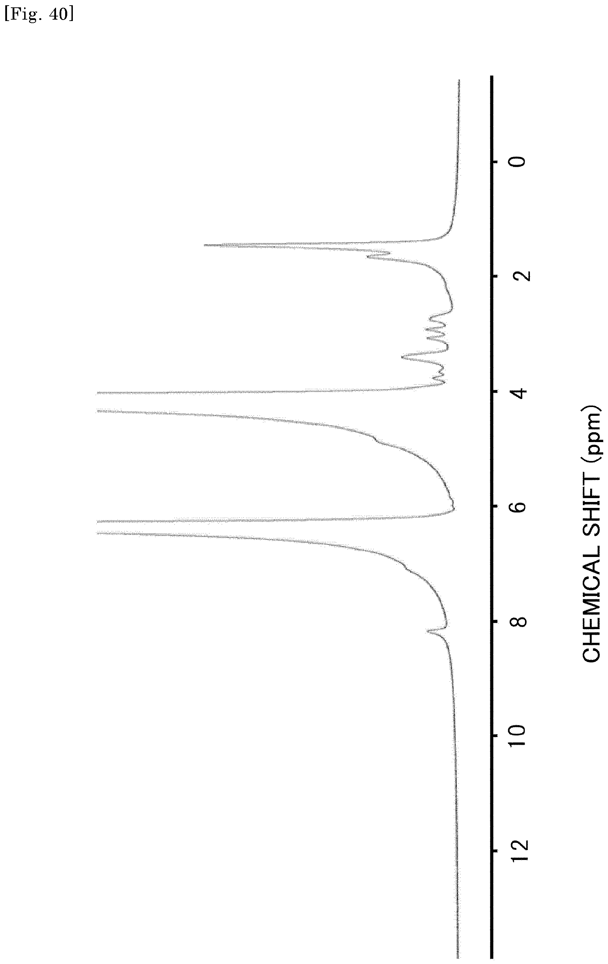

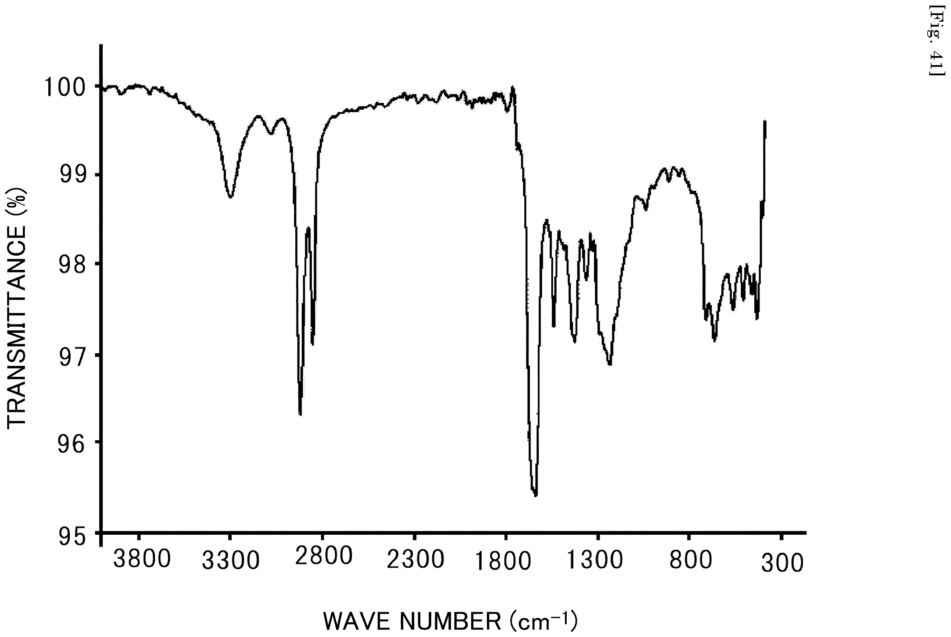

Next, 20 g of the reaction product obtained in the above was mixed with 0.2 g of sodium dihydrogen phosphate as a catalyst for 1 hour in nitrogen gas atmosphere. While the pressure of the reaction atmosphere was reduced, the resulting mixture was heated at 180°C for 1 hour, and then at 250°C for 4 hours under stirring, to give a polyamide-based random copolymer (hereinafter referred to as polymer T). The number average molecular weight of the polymer T was 2680000. A nuclear magnetic resonance (¹H-NMR) spectrum of the polymer T is shown in Fig. 40, and an infrared absorption spectrum of the polymer T is shown in Fig. 41.

Next, properties of each polymer obtained in each working example or each comparative example were examined. The results are shown in Table 1.

**[TABLE 1]**

| Ex. and Comp. Ex. | T_{d5} (°C) | T_{d10} (°C) | Tg (°C) | Tc(°C) | Tm (°C) |
|---|---|---|---|---|---|
| Ex. 1 | 410 | 420 | 66 | ND | ND |
| Ex. 2 | 410 | 425 | 58 | ND | ND |
| Ex. 3 | 405 | 421 | 50 | ND | ND |
| Ex. 4 | 400 | 421 | 43 | 113 | 158 |
| Ex. 5 | 405 | 422 | 49 | 111 | 159 |
| Ex. 6 | 410 | 425 | ND | 155 | 183 |
| Ex. 7 | 378 | 411 | ND | 171 | 196 |
| Ex. 8 | 378 | 408 | ND | 181 | 206 |
| Ex. 9 | 395 | 420 | ND | 185 | 208 |
| Ex. 10 | 427 | 439 | 50 | 185 | 155 |
| Ex. 11 | 423 | 443 | 45 | 175 | 155 |
| Ex. 12 | 392 | 426 | 48 | 190 | 160 |
| Ex. 13 | 389 | 427 | 50 | 185 | 161 |
| Ex. 14 | 421 | 436 | 48 | 175 | 166 |
| Ex. 15 | 412 | 430 | 44 | 170 | 158 |
| Comp. Ex. 1 | 395 | 410 | 75 | ND | ND |
| Comp. Ex. 2 | 373 | 404 | ND | 188 | 214 |
| Comp. Ex. 3 | 400 | 411 | 60 | 192 | ND |
| Comp. Ex. 4 | 402 | 415 | 57 | 180 | 152 |
| Comp. Ex. 5 | 399 | 413 | 55 | 170 | 152 |

| | | | | | |
|---|---|---|---|---|---|
| (Note) ND denotes "not detected." | | | | | |

From the results shown in Table 1, it can be seen that each polymer obtained in each working example is excellent in heat resistance since a 10% weight loss temperature (T_{d10}) of the polymer obtained in each working example is 400°C or higher. In addition, it can be seen that the polymer obtained in each working example is excellent in moldability since the amorphous polymer has a glass transition temperature (Tg) of 66°C or less, or a crystallization temperature (Tc) of 190°C or less, and the melting point (Tm) of the polymer is 210°C or less, so that the polymer is softened and melted by heating the polymer.

### (3) Tensile strength, elongation at break and Young's modulus of a filament

Each polymer obtained in each working example or each comparative example was heated to 210°C, to give a softened or melted polymer, and the softened or melted polymer was used as a spinning liquid. The spinning liquid was applied to a glass plate, and a glass rod was contacted with the surface of the spinning liquid on the glass plate. Thereafter, the glass rod was pulled away from the glass plate to extend the spinning liquid, to give 3 filaments each having a fiber diameter of about 200 pm.

The maximum intensity of the filament was determined until the filament was broken by pulling the filament having a fiber diameter of about 200 pm and a length of 40 mm at a crosshead speed of 1 mm/sec at room temperature with a tensile testing machine [manufactured by Illinois Tool Works Inc., trade name: INSTRON 3365-L5]. An elongation at break of the filament is a value as determined by measuring a length of the filament when the filament is broken in determining the tensile strength of the filament, dividing the length of the filament at break by the original length of the filament, and multiplying an obtained value by 100. Young's modulus was determined from an initial inclination of a stress-strain curve.

The tensile strength, elongation at break and Young's modulus of the filament were measured for the three filaments. Each average value of each property of the three filaments was defined as tensile strength, elongation at break and Young's modulus of each filament. The results are shown in Table 2.

**[TABLE 2]**

| Ex. and Comp. Ex. | Tensile strength (MPa) | Elongation at break (%) | Young's modulus (MPa) |
|---|---|---|---|
| Ex. 1 | 33 | 55 | 910 |
| Ex. 2 | 31 | 95 | 930 |
| Ex. 3 | 32 | 160 | 950 |
| Ex. 4 | 32 | 223 | 960 |
| Ex. 5 | 32 | 297 | 970 |
| Ex. 6 | 31 | 323 | 1070 |
| Ex. 7 | 31 | 330 | 1070 |
| Ex. 8 | 32 | 335 | 1080 |
| Ex. 9 | 33 | 335 | 1090 |
| Ex. 10 | 120 | 70 | 200 |
| Ex. 11 | 115 | 65 | 180 |
| Ex. 12 | 96 | 9 | 196 |
| Ex. 13 | 98 | 9 | 200 |
| Ex. 14 | 101 | 10 | 215 |
| Ex. 15 | 96 | 10 | 189 |
| Comp. Ex. 1 | 80 | 3 | 200 |
| Comp. Ex. 2 | 29 | 6 | 205 |
| Comp. Ex. 3 | 94 | 6 | 250 |
| Comp. Ex. 4 | 91 | 10 | 242 |
| Comp. Ex. 5 | 96 | 12 | 255 |

| | | | |
|---|---|---|---|
| (Note) ND denotes "not detected." | | | |

From the results shown in Table 2, it can be seen that each polymer obtained in Examples 1 to 11 had a high tensile strength and is remarkably excellent in extensibility, because each polymer had a tensile strength of 30 MPa or more, an elongation at break of 50% or more, and a Young's modulus of 180 MPa or more. In addition, it can be seen that each polymer obtained in Examples 10 to 15 is excellent in tensile strength, because each polymer had a tensile strength of 95 MPa or more, and that each polymer obtained in Examples 12 to 15 had a small elongation at break.

### (4) Hydrophilicity, and disintegration and degradability in water of a polymer after irradiation of ultraviolet rays

A solubility of 1mg of the polyamide-based polymer obtained in each working example in 1 mL of an organic solvent of 50°C was examined. As a result, the polyamide-based polymer obtained in each working example was soluble in the organic solvents such as dimethyl sulfoxide, N,N-dimethylformamide and trifluoroacetic acid, and it was confirmed that the obtained solution could be used as a spinning solution.

In addition, a glass plate was flow coated with the organic solvent solution of the polyamide-based polymer obtained in each working example. As a result, a film could be formed. From this result, it can be seen that the polyamide-based polymer obtained in each working example can be used as a molding material for producing a molded product such as a film.

Next, 0.5 g of the polyamide-based polymer obtained in each working example was weighed. The polyamide-based polymer was added to 100 mL of a solution (solution temperature: 25°C), in which the solution was 10% hydrochloric acid, 10% hydrochloric acid containing pepsin in a content of 0.5% by mass, 10% hydrochloric acid containing pepsin in a content of 0.7% by mass, 10% hydrochloric acid containing pepsin in a content of 0.9% by mass, 10% hydrochloric acid containing pepsin in a content of 1.0% by mass, or an aqueous solution containing pepsin in a content of 0.5% by mass, and the resulting mixture was stirred for 3 minutes. Thereafter, appearance of each solution was observed with naked eyes. As a result, it was confirmed that the polyamide-based polymer obtained in each working example became a viscous liquid in hydrochloric acid, that the polyamide-based polymer was disassembled and completely dissolved in hydrochloric acid containing pepsin, and that the polyamide-based polymer became cloudy in water containing pepsin.

From the above results, it can be seen that the polyamide-based polymer obtained in each working example is excellent in hydrophilicity, degradability and decomposability in water, because the polyamide-based polymer can be easily decomposed in a short period of time by an enzyme such as pepsin.

### (5) Moldability

### [Moldability to a fiber]

A polymer was heated to 250°C, and the resulting melted or softened product was used as a spinning liquid. The spinning liquid obtained in the above was applied to a glass plate, and a glass rod was promptly contacted with the surface of the spinning liquid on the glass plate. Thereafter, the glass rod was promptly pulled away from the glass plate to extend the spinning liquid, to examine whether or not a filament could be formed.

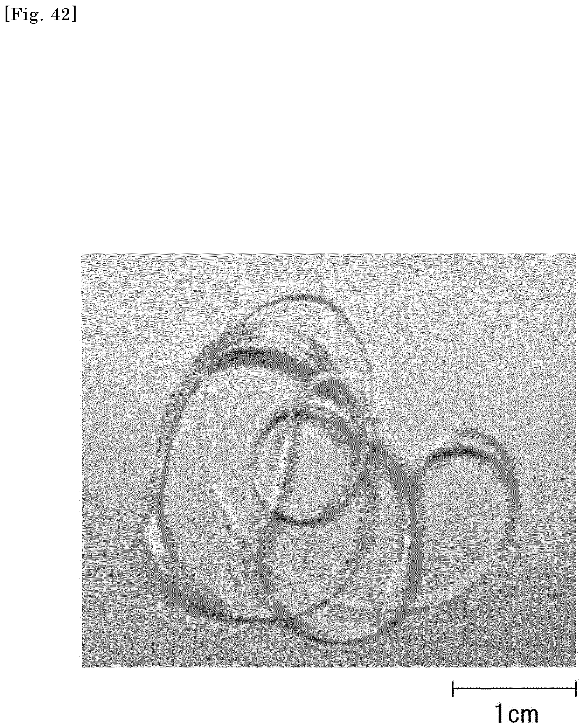

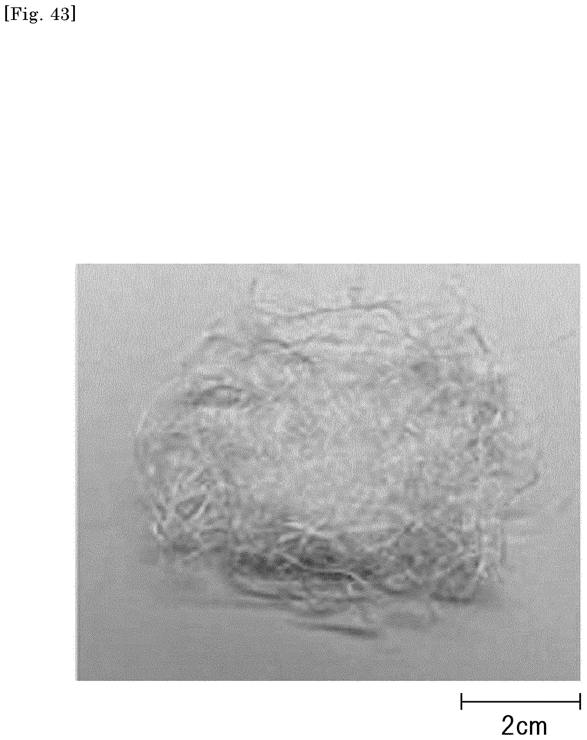

As a result, a filament could be produced by using the polymer obtained in each example. As one of its embodiments, a filament produced by using the polymer B obtained in Example 2 is shown in Fig. 42, and a filament produced by using the polymer F obtained in Example 6 is shown in Fig. 43. In addition, among the filaments produced by using the polymers obtained in the working examples, it was confirmed that the filament could be easily produced by using the polymers obtained in Examples 2 to 6, because these polymers had a high viscosity, respectively.

On the other hand, a filament could not be produced from the polymers obtained in Comparative Examples 1 and 2, because these polymers were hard, and had poor extensibility.

From these facts, it can be seen that the polyamide-based polymer obtained in each working example is excellent in moldability such as spinnability.

### [Formability to a film]

A solubility of 1mg of the polymer obtained in each working example in 1 mL of an organic solvent of 50°C was examined. As a result, it was confirmed that the polyamide-based polymer obtained in each working example was soluble in the organic solvents such as dimethyl sulfoxide, N,N-dimethylformamide and trifluoroacetic acid.

Next, a glass plate was flow coated with the organic solvent solution of the polymer obtained in each working example. As a result, a film could be formed from the organic solvent solution. From this result, it can be seen that the polymer obtained in each working example can be used as a molding material for producing a molded product such as a film.

In addition, when a glass plate was flow coated with the molten polymer obtained by heating and melting the polymer obtained in each working example, a film could be formed from the molten polymer. From this result, it can be seen that these polymers can be used as a molding material for producing a molded product such as a film by melting the polymers.

### INDUSTRIAL APPLICABILITY

The polyamide-based polymer according to the present invention can be used for fishing gears such as a fishing net and a fishing line, agricultural implements, and the like as a substitute for conventional nylon, since the polyamide-based polymer according to the present invention is comprehensively excellent in disintegrability and degradability in water, extensibility and toughness. Also, the polyamide-based polymer is expected to contribute to weight reduction of automobiles and thereby improvement of fuel economy when the polyamide-based polymer is applied to automobile components, because the polyamide-based polymer can be used as a high-performance polyamide-based polymer.

In addition, since the polyamide-based polymer according to the present invention is comprehensively excellent in heat resistance, stretchability, moldability, tensile strength, hydrophilicity, and disintegrability and degradability in water, the polyamide-based polymer is expected to be used for developing applications to fibers such as sutures used in operating animals including humans.

## Claims

1. A polyamide-based polymer made of a dicarboxylic acid monomer, a diamine compound and a dicarboxylic acid compound, wherein itaconic acid is used as the dicarboxylic acid monomer; a diamine compound represented by the formula (I):
H₂N-R¹-NH₂ (I)
wherein R¹ is an alkylene group having 4 to 12 carbon atoms,
is used as the diamine compound; and the dicarboxylic acid compound represented by the formula (II):
HOOC-R²-COOH (II)
wherein R² is an alkylene group having 8 to 24 carbon atoms,
is used as the dicarboxylic acid compound.

2. A polyamide-based fiber comprising the polyamide-based polymer according to claim 1.

3. A molding material comprising the polyamide-based polymer according to claim 1.

4. A method for producing a polyamide-based polymer made of a dicarboxylic acid monomer, a diamine compound and a dicarboxylic acid compound, comprising:
using itaconic acid as the dicarboxylic acid monomer, a diamine compound represented by the formula (I):
H₂N-R¹-NH₂ (I)
wherein R¹ is an alkylene group having 4 to 12 carbon atoms,
as the diamine compound, and dicarboxylic acid compound represented by the formula (II):
HOOC-R²-COOH (II)
wherein R² is an alkylene group having 8 to 24 carbon atoms,
as the dicarboxylic acid compound;
carrying out a reaction of itaconic acid with the diamine compound represented by the formula (I) and the dicarboxylic acid compound represented by the formula (II); and
carrying out a polymerization of the resulting reaction product.
